(19) Europäisches Patentamt / European Patent Office / Office européen des brevets

(11) **EP 3 415 977 B1**

(12) **EUROPEAN PATENT SPECIFICATION**

(45) Date of publication and mention of the grant of the patent:
**29.01.2025 Bulletin 2025/05**

(21) Application number: **17750346.3**

(22) Date of filing: **09.02.2017**

(51) International Patent Classification (IPC):
*G02B 27/09* (2006.01)    *B23K 26/064* (2014.01)
*B23K 26/382* (2014.01)    *G02B 5/00* (2006.01)
*B23K 26/06* (2014.01)    *H01S 3/00* (2006.01)

(52) Cooperative Patent Classification (CPC):
**B23K 26/064; B23K 26/0648; B23K 26/0652; B23K 26/382; G02B 5/00; G02B 5/001; G02B 27/0944; G02B 27/425**

(86) International application number:
**PCT/JP2017/004834**

(87) International publication number:
**WO 2017/138625 (17.08.2017 Gazette 2017/33)**

(54) **LASER BEAM SHAPING DEVICE AND REMOVAL MACHINING DEVICE**

LASERSTRAHLFORMUNGSVORRICHTUNG, SOWIE ENTFERNUNGSBEARBEITUNGSVORRICHTUNG

DISPOSITIF DE MISE EN FORME DE FAISCEAU LASER ET DISPOSITIF D'USINAGE PAR ENLÈVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2016 JP 2016024150**

(43) Date of publication of application:
**19.12.2018 Bulletin 2018/51**

(73) Proprietor: **Riken**
**Wako-shi, Saitama 351-0198 (JP)**

(72) Inventor: **SUGIOKA, Kouji**
**Wako-shi**
**Saitama 351-0198 (JP)**

(74) Representative: **Huebner, Stefan Rolf et al**
**Postfach 101317**
**80087 München (DE)**

(56) References cited:
JP-A- 2000 249 950    JP-A- 2008 026 586
JP-A- 2011 170 052    JP-A- 2011 170 052
JP-A- 2015 226 922    JP-A- 2015 226 922
US-A1- 2013 208 256    US-A1- 2014 003 456

• DATABASE WPI Week 201113, Derwent World Patents Index; AN 2011-B26100, XP002793971

EP 3 415 977 B1

**EP 3 415 977 B1**

**Description**

Technical Field

The present invention relates to a laser beam shaping device and a removal machining device. More specifically, the present invention relates to: a laser beam shaping device for formation of a laser beam that has a peak extending in an optical axis direction and has reduced side-lobes and a subtractive machining apparatus that uses the laser beam shaping device.

Background Art

In the technical field of semiconductor integrated circuits, microfabrication thereof for higher integration and higher density has advanced, recently. For example, techniques have been developed for interconnection among plural chips or thin pieces of dies, which have integrated circuits formed thereon, such that they are stacked. Electrically conductive passages penetrating a single crystal silicon substrate (hereinafter, referred to as "silicon substrate") in its thickness direction are also called through silicon vias (TSVs). One of methods that have been proposed for formation of TSVs uses subtractive machining by laser. In this method, laser beams called Bessel beams are adopted for formation of through holes, and micromachining by laser pulses of these Bessel beams has been attempted (as seen in, for example, PTL1 and NPL1). A Bessel beam is formed by convergence of a conical wavefront to the axis of the cone, and for realization of this conical wavefront, for example, a conical prism-shaped transmissive optical element called an AXICON is adopted.
Expectations for use of laser beams having peaks extending in the optical axis direction like Bessel beams, not only for micromachining, but also for a wide variety of purposes, are high. For example, drilling or cutting of solid materials, such as metals, semiconductors, ceramics, and insulators (glass), is an example of subtractive machining involving removal of a substance by laser, regardless of size thereof. Furthermore, performance of bioimaging microscopes and optical tweezers (trapping and manipulation of microparticles, for example) is able to be improved if formation of a peak extending in the optical axis direction is possible.

Citation List

Patent Literature

PTL1: Japanese Unexamined Patent Application, Publication No. 2015-226922
PTL2: Japanese Unexamined Patent Application, Publication No. 2011-170052
PTL3: Japanese Unexamined Patent Application, Publication No. H06-082720 (Japanese Patent No. 3553986) From JP 2011 170052 A, forming the basis for the preamble of claim 1, a laser beam shaping device is known that comprises, ia, a light source device that generates a laser beam, a phase adjusting unit, a multiple beam generating unit and beam limiting means. The multiple beam generating unit generates Bessel beams by means of converging a parallel laser light beam onto an optical axis with different convergence angles; it generates multiple beams by superimposing the generated Bessel beams for each convergence angle so that the side lobes cancel each other. The beam limiting means limits the passage of the parallel laser light beam or the multiple beams that contribute to the generation of side lobes.
CN 101930090 A discloses a multi-ring beam shaper that has mutually corresponding beam input surfaces and beam output surfaces. The beam input surface is provided with a plurality of concentric rings, and the concentric rings have a phase step structure.

Similarly, US 2014-003456 A1 discloses a device for transforming the profile of a laser beam into a laser beam with a rotationally symmetrical intensity distribution. For this, it comprises a lens array that includes a plurality of lenses, which surround the optical axis of the lens array as concentric rings.

Non-Patent Literature

NPL1: M. K. Bhuyan et. al., "High aspect ratio nanochannel machining using single shot femtosecond Bessel beams", Appl. Phys. Lett. 97, 081102 (2010)
NPL2: J. Jia et. al., "Superresolution laser beam shaping", Appl Opt 43, 2112-2117 (2004)

NPL3: X. Wang et. al., "Resolution improvement of femtosecond laser induced two-photon polymerization based on phase filtering", Opt. Eng. 50(5), 054302 (2011)

## Summary of Invention

### Technical Problem

In the process of studying the TSV technology using conventional Bessel beams, inventors of the present patent application focused on the adverse effects of side-lobes. For example, for interconnection between dies for semiconductor integrated circuits, the ratio (the aspect ratio) of the inner diameter of the through hole to the overall length of the through hole, that is, to the thickness of the plate-like semiconductor substrate to be machined, is desirably high. In addition, if the pitch of the through holes arranged is able to be narrowed, fabrication is enabled with highly dense interconnections of multiple dies without large changes in the semiconductor substrates. There is a strong demand for a technique for complementation of reduction in die sizes due to microfabrication in semiconductor integrated circuits, through pursuit of performance measures, such as increase of the aspect ratio or narrowing of the pitch.

However, even if a laser beam is shaped into a Bessel beam for formation of a fine hole having an inner diameter of about several $\mu$m to 50 $\mu$m, the Bessel beam is accompanied by side-lobes surrounding the central lobe high in intensity, the side lobes having intensity that is lower than that of the central lobe but that is non-negligible. Due to these side-lobes, damage due to plural concentric surface defects is typically caused around the opening of a through hole formed by the beam at the central lobe. Once this surface damage is formed, even if another through hole is attempted to be formed successively near that through hole, laser scattering due to the surface defects is caused, the wavefront of the laser emitted is distorted, the Bessel beam is not properly formed, and thus the shape accuracy of the through hole is decreased. For example, if a through hole narrows or breaks off at an intermediate position in the through hole, reliability of the TSV electric connection through that through hole is impossible to be achieved. Even if the laser power is increased for prevention of this narrowing or break off, since damage due to the side lobes is increased thereby, the above mentioned problem is not solved. Reduction of side-lobes can be said to be crucial for increase in the reproducibility in formation of through holes, infallible execution of the process for formation of plural through holes at a narrow pitch, and consequently increase in the reliability of highly dense interconnection.

Furthermore, similar circumstances apply to uses other than micromachining. This is because, for a use where a Bessel beam is adopted instead of a Gaussian beam generated by a most general imaging optical system, only the central lobe extending in the optical axis direction and exhibiting sufficient light focusing performance is usually used. For most uses, side-lobes become a factor that largely lessens the advantage of formation of a light focused region by the central lobe, and are a target to be reduced. If, together with sufficient reduction of side-lobes, realization of a light focused region of a central lobe extending in the optical direction is possible, the weak points of Bessel beams are able to be overcome.

Based on similar points of view, attempts for reduction of side-lobes in Bessel beams have been disclosed in, for example, PTL2 and PTL3. These attempts are either: a method where a double Bessel beam is formed and Bessel beams are superimposed with each other such that their side lobes cancel each other (Abstract in PTL2); or a method where two Bessel beams having different diameters and optical amplitude distributions are superimposed and caused to interfere with each other (Claim 1 in PTL3). In these methods disclosed therein, at least one of the following two types of optical elements is adopted. The first type is a transmissive optical element having conical surfaces with different slope angles. Examples of this first optical element include: the multiple beam generating means 9 and 35 and the diffractive optical element 18, in PTL2; and the double conical prisms 5 and 5' in PTL3. The second type is an element that limits transmission of a laser beam incident on the first optical element or another element having light focusing property (for example: the lens 65 or the objective lens 78, in PTL2; or the lens 2 or 65 or the objective lens 78, in PTL3) and that imparts an intensity distribution to the laser beam. Examples of this second optical element include: the beam limiting means 8, 19, and 34, the mask 64, and the aperture 75, in PTL2; and the double ring opening 1 in PTL3. However, the side-lobe reduction effects of the disclosed methods are limited. For example, in PTL2 and PTL3, the side-lobes are respectively reduced to about 1.2% and about 6% when the peak values of the central lobes are 100% (FIG. 26 in PTL2; and paragraph 0022 in PTL3). The intensity of side-lobes in Bessel beams that have not been tailored at all reaches about 16% of that of the central lobes (paragraph 0002 in PTL2; and paragraph 0004 in PTL3).

Since the structure of the transmissive optical element having conical surfaces of different slope angles mentioned above as the first example is complicated, essentiality of such an element itself hinders its practicability. Further, since the second example mentioned above, which is the element that limits transmission of a laser beam incident thereon and imparts an intensity distribution to the laser beam, decreases the intensity of laser, this decrease becomes a constraint, particularly in uses that require output of intense laser, such as machining.

An object of the present invention is to solve any of the above described problems. The present invention contributes to improvement of laser beam shaping devices and subtractive machining apparatuses by: employment of an actual conical prism (an axicon) for formation of a conventional Bessel beam; and provision of a highly practical laser beam shaping technique for effective reduction of side lobes.

Solution to Problem

In order to look for specific means for solving the above described problems, the inventors of the present patent application investigated whether reduction of side lobes was possible, by using a transmissive optical element made in a shape having an approximately conical surface, that is, a conical prism, and adding an annular zone phase element thereto. This is because in an annular zone phase element, output of laser is able to be efficiently utilized without being absorbed or reflected. The inventors confirmed that beam shaping was possible by employment of an annular zone phase element having special properties: according to a principle that energy of side-lobes is distributed to the central lobe; or by limitation of the axial direction range (depth of field, DOF) of the central lobe to a required range. Specifically, the inventors have: found, by calculation, that efficient reduction of side-lobes is possible by employment of a simple device configuration including just an annular zone phase element having special properties and a general axicon lens, in particular, the possibility that this device configuration enables the reduction of side-lobes to 0.6% or less; and completed the present invention by experimentally confirming the performance of this device configuration.

That is, provided according to the present invention is a laser beam shaping device with the features of claim 1. The laser beam shaping device includes: an annular zone phase element that imparts a phase distribution that is axisymmetrical about a rotational axis and increases and decreases according to distance from the rotational axis, to laser light of a predetermined wavelength; and a transmissive optical element that has a protruding surface on at least a part of a surface thereof and is made of a material having a refractive index higher than that of surroundings thereof at the predetermined wavelength, the protruding surface having a shape of an approximately conical surface having a conical axis; and in which the annular zone phase element and the transmissive optical element are arranged such that the laser light is propagated along the rotational axis and the conical axis and passes through the protruding surface.

Furthermore, according to the present invention, an embodiment of a subtractive machining apparatus is also provided. That is, according to another embodiment of the present invention, provided is a subtractive machining apparatus, wherein the predetermined wavelength is a wavelength that is able to reach inside a workpiece, the subtractive machining apparatus including: a light source for emitting a pulse of laser light of the predetermined wavelength; a laser beam shaping device that the pulse of the laser light from the light source is incident on and that forms a tailored Bessel beam; and a positioning device for performing positioning such that the central lobe formed by the laser beam shaping device from the pulse of the laser light overlaps a part or all of a removal target path positioned inside the workpiece.

According to each of the above described embodiments of the present invention, the annular zone phase element refers to an arbitrary element that imparts a phase distribution axisymmetrical about a certain rotational axis, to laser light of a predetermined wavelength. For example, it is assumed that laser light of a predetermined wavelength passes through a space where no media exist (for example, in air without density fluctuation or in a vacuum). A substrate, which is an element having a transmissive medium substrate with a refractive index higher than that of the surroundings, and which has been processed so as to have different thicknesses according to distances from a rotational axis supposed to be fixed to the element, is an example of the annular zone phase element. This is because, a difference in thickness of a refractive index medium imparts an optical path difference according to a difference between the refractive index of the refractive index medium and the refractive index of the surroundings and the difference in thickness, to laser light of a predetermined wavelength passing therethrough in a normal direction of the substrate, and this impartment is axisymmetrical about the rotational axis. Other than a transparent medium substrate with processed thickness, an element having a light transmissive thin film patterned on a transparent medium substrate having a uniform thickness, for example, may be adopted as an annular zone phase element for transmitted laser light. Furthermore, not being limited to that of the transmissive type, for example, the annular zone phase element may be a relief-type reflective film having patterned height.

According to each of the above described embodiments of the present invention, the transmissive optical element has a protruding surface having a shape of an approximately conical surface. This approximately conical surface refers, not only to the lateral surface of a cone as geometrically defined, but also to a shape that has been made in an attempt for formation of a conical surface but that includes deviation from this defined shape. As described later with respect to embodiments, actual conical prisms (axicons) do not necessarily have ideal conical surfaces. It must be noted that even if that is the case, it does not hinder the practical use of a laser beam shaping device according to the present invention, and a conforming annular zone phase element is able to be realized.

According to an embodiment of the subtractive machining apparatus of the present invention, a laser beam generated by the above described laser beam shaping device is used. Differently from a conventional Bessel beam, the laser beam can be said to have a beam profile of a Bessel beam that has been tailor-made according to a specific purpose, and this laser beam is also called a tailored Bessel beam. This tailored Bessel beam has characteristics suitable for subtractive machining that is arbitrary machining for manufacture of any shape by removal of material. The subtractive machining referred to in this patent application includes various kinds of machining for removal of a micro part of a material by laser, such as drilling of through holes and the like, cutting, and groove machining. Therefore, microscope apparatuses involving such machining, and any other micromachining apparatuses are also included in subtractive machining apparatuses according to the present invention. Their workpieces are not particularly limited, and one of typical workpieces is a semiconductor material substrate, in particular, a silicon substrate. Examples of this silicon substrate include a so-called silicon wafer and a silicon on insulator (SOI) wafer. At the time of subtractive machining, a workpiece may have other necessary material and structure fabricated thereon, such as a certain circuit element or wiring, or a protective film.

Laser generally used in laser machining is hardly able to reach inside a workpiece when seen at a time point when removal from the workpiece has not been performed. This is because laser machining is generally thermal processing, and for generation of heat therefor, energy absorption by the workpiece is needed. In contrast, in the subtractive machining apparatus according to the present invention, laser is preferably configured to have a wavelength that is able to reach inside the workpiece. Such a wavelength would generally be a wavelength having a sufficiently high transmittance for a workpiece. For example, if a semiconductor substrate serving as a workpiece is a silicon substrate, laser of a wavelength that is substantially the same as the absorption edge (band edge of 1.13 $\mu$m) of single crystal silicon (for example, 1.12 $\mu$m), or longer one with weak absorption, is preferably adopted. Pulsed laser is typically used, and is emitted as a single pulse (single shot) or repeated pulses (multishot). Examples of the light source in the context of the present patent application include both a light source that directly emits laser light, and a combination of this light source and an element that executes some processing as needed on the light from the light source. This element is typically an element that executes pulse width shaping of compressing a time profile of the beam. In addition, throughout this patent application, according to the usual practice, terms in the optical field, such as "light", "light source, "light emission", and "laser", will be used for electromagnetic radiation that cannot be said to be visible light, such as, for example, that in the infrared region, too.

The inventors of the present patent application presume that material of a semiconductor substrate is removed by a subtractive machining apparatus configured as described above because multiphoton absorption where multiple photons, rather than an individual photon, are involved in absorption is caused. If nonlinear absorption, such as multiphoton absorption, is able to be caused by: spatial light focusing by a combination of an annular zone phase element and a transmissive optical element; and temporal compression by pulse shaping; light is able to be focused by passage through thickness of a workpiece, and energy transfer required for machining is able to be caused near a central probe thereof. This point will be described later in the Description of Embodiments section.

The removal target path is a range of a path positioned inside a workpiece, for representative determination of a position where at least a part of an object serving as the workpiece is removed. A typical example of the removal target path, in a case where a through hole joining both sides of a plate-like workpiece is formed, is a line segment, which extends in the thickness direction supposed at a position where the through hole is to be formed, and which joins these sides. Further, if a non-through hole drilled to a position intermediate in the thickness in the depth direction is formed, the removal target path that is a line segment in the thickness direction also terminates at that intermediate position or in the vicinity of the intermediate position.

By use of the positioning device, the peak range of the central lobe of a tailored Bessel beam is positioned to overlap a part or all of its removal target path. The positioning device serves as an arbitrary means for positioning of a relative position of a workpiece, with respect to the peak range. A typical positioning device is realized by a mechanical device, and is, for example, a device that moves and stops a computer-controlled movable stage having a workpiece placed thereon, or that moves and stops an optical system. Other than that, positioning may be executed by an optical means. Machining by use of the central lobe is high in freedom of positioning of the workpiece. In ordinary laser machining where machining is carried out by focusing of a Gaussian beam, a peak range in the beam axis direction is as very short as just several times the focused diameter, and thus machining needs to be carried out while a spot to be machined is constantly positioned to the focused point. In contrast, since the peak range of the central lobe is sufficiently longer than the thickness of a workpiece, the workpiece just needs to be positioned to any position in the peak range, and positioning often does not need to be carried out again during machining.

Advantageous Effects of Invention

According to an embodiment of the laser beam shaping device of the present invention, by a simple configuration, which is just a combination of the annular zone phase element and the transmissive optical element, a tailored Bessel beam having reduced side lobes that would otherwise accompany a Bessel beam is able to be realized. Furthermore, according to an embodiment of the subtractive machining apparatus of the present invention, while the advantage of a tailored Bessel beam is taken, for example, formation of a through hole having a high aspect ratio, or formation of an array of through holes arranged at a narrow pitch is enabled. The annular zone phase element used in the laser beam shaping device or the subtractive machining apparatus is useful for realization of a tailored Bessel beam by being combined with a transmissive optical element.

Brief Description of Drawings

FIG. 1 is an explanatory diagram illustrating a conventional Bessel beam.

FIG. 2 is optical micrographs of substrate surfaces around a through hole formed by use of a conventional Bessel beam.

FIG. 3 is an explanatory diagram illustrating a configuration of a beam shaping device according to an embodiment of the present invention.

FIG. 4 is an explanatory diagram illustrating, based on calculated results, beam profiles of a conventional Bessel beam and a tailored Bessel beam according to the embodiment of the present invention.

FIG. 5 is a configuration diagram illustrating a schematic configuration of a BPP made by use of a light transmissive substance, the BPP being an example of an embodiment of the present invention.

FIG. 6 is calculated values for transverse direction and longitudinal direction beam profiles obtained for each of a conventional Bessel beam, and BPP1 and BPP2 that are examples of an annular zone phase element according to the embodiment of the present invention.

FIG. 7 is a flow chart illustrating an optimization process for parameters (M and $\{r_m\}$) by an SA algorithm adopted in the embodiment of the present invention.

FIG. 8 is transverse direction and longitudinal direction beam profiles experimentally obtained for each of a conventional Bessel beam and the BPP1 and BPP2 that are examples of the annular zone phase element according to the embodiment of the present invention.

FIG. 9 is transverse direction and longitudinal direction beam profiles obtained experimentally, which are of a conventional Bessel beam (FIG. 9A), and of those when the BPP1 (FIG. 9B) and the BPP2 (FIG. 9C) that are examples of the annular zone phase element according to the embodiment of the present invention have been adopted.

FIG. 10 is intensity distributions of beam cross-sections near peaks, images thereof, and intensity profiles, which were experimentally obtained, and which are those of a conventional Bessel beam (FIG. 10A), and those for the BPP1 (FIG. 10B) and BPP2 (FIG. 10C) that are examples of the annular zone phase element according to the embodiment of the present invention.

FIG. 11 is a configuration diagram illustrating a configuration of a subtractive machining apparatus according to an embodiment of the present invention.

FIG. 12 is SEM observation images of TSV samples obtained by formation of through-holes in 50-$\mu$m thick Si substrates by laser beams having different profiles, according to an embodiment of the present invention.

FIG. 13 is observed images of a cross-section (FIG. 13A) and surfaces (FIG. 13B and FIG. 13C) of a sample having a TSV array with 50-$\mu$m intervals formed in a 100-$\mu$m thick Si substrate, according to an embodiment of the present invention.

Description of Embodiments

Hereinafter, embodiments of a laser beam shaping device and a subtractive machining apparatus, according to the present invention, will be described by reference to the drawings. In the description, unless particularly stated, common parts or elements will be assigned with common reference signs.

1. Improvement of Bessel Beams

1-1. Conventional Bessel Beams

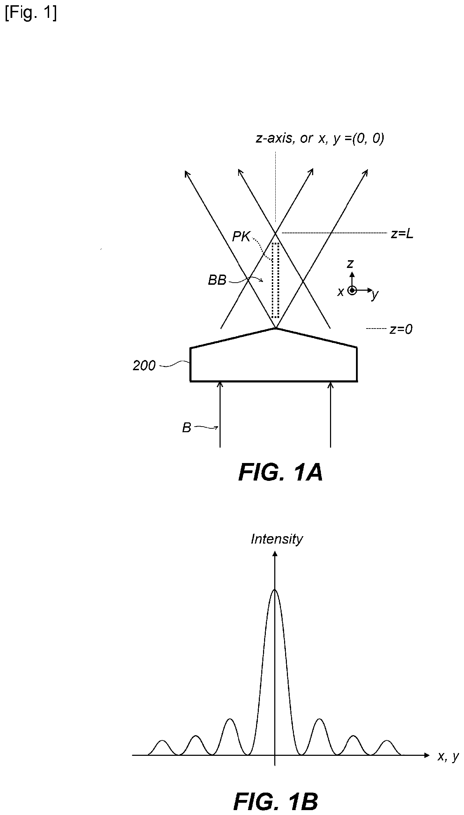

Before the description of the embodiments, a conventional Bessel beam will be described. FIG. 1 is explanatory diagrams illustrating a conventional Bessel beam, FIG. 1A illustrating how a Bessel beam BB is obtained from a beam B of a plane wave propagated parallel to the plane of paper from a lower portion to an upper portion on the plane of paper, FIG. 1B being a schematic diagram illustrating a beam profile on a plane orthogonal to the beam axis. The Bessel beam BB is an axisymmetric beam. By reference to an xyz Cartesian coordinate system (FIG. 1A) having a z-axis aligned with the beam axis, the Bessel beam BB can be described as having high optical intensity near the z-axis on a plane parallel to the xy plane, that is, a plane having the z-axis as a normal line. Three-dimensionally, this peak has a peak range extending along the z-axis. The peak range is, for example, all or a part of z = 0 to L illustrated in FIG. 1A, and a specific peak range is determined by: the range of the beam B of laser light; and a transmissive optical element 200, which is an optical system that forms the Bessel beam BB. A typical example of the transmissive optical element 200 is a conical prism (an axicon). The peak range of the central lobe is narrow in width, and extends in the z-axis direction; and FIG. 1A illustrates, with a dotted line, a cut section on the axis of the cylinder of a peak range PK. A beam profile on the plane parallel to the xy plane is as illustrated in FIG. 1B. This profile is not significantly dependent on position on the z-axis. The conventional Bessel beam BB has a beam profile, in which a peak range having optical intensity extends on the z-axis considerably, and which is rapidly weakened as the distance from the z-axis is increased, and the optical intensity indicates undulation according to the distance from the z-axis. This undulation forms a distribution like a multi-layered tubes coaxial with the cylinder of the peak range PK. These multitube components excluding the central axis are called, in contrast with the central lobe, side lobes. Among the side lobes in the conventional Bessel beam, a side lobe that appears first as the distance from the z-axis is increased has the largest intensity, which reaches a value of around 16% (about 1/6) when the peak value of the central lobe is 100%.

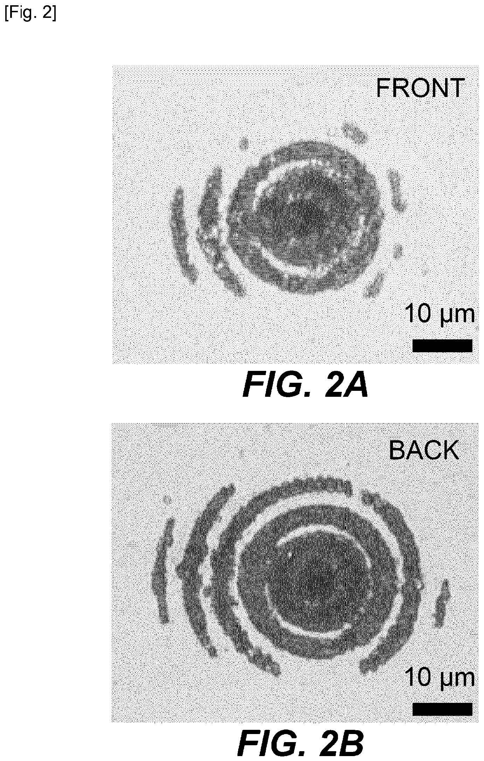

FIG. 2 is optical micrographs illustrating an example of a through hole formed in a silicon wafer (having a thickness of 500 $\mu$m) formed by use of a conventional Bessel beam. When surfaces of the wafer were observed, multi-ring surface damages due to influence of side-lobes were observed around the through hole formed by the central lobe, on both the entrance surface (FIG. 2A) and the exit surface (FIG. 2B).

1-2. Configuration and Principle of Beam Shaping Device

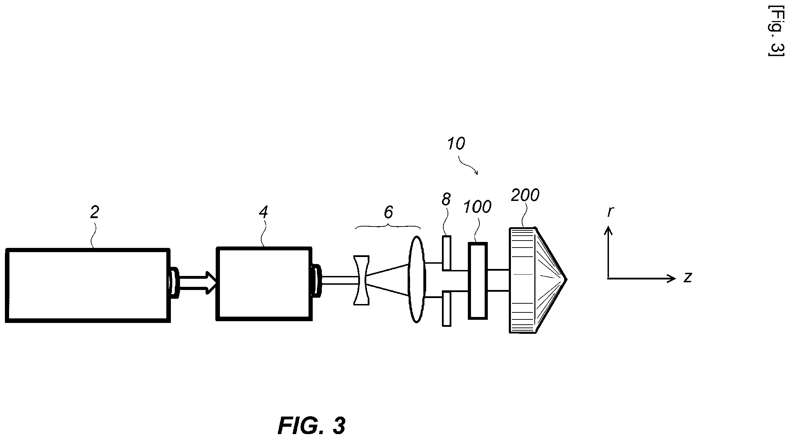

Next, a configuration of an embodiment will be described. FIG. 3 is a diagram illustrating a configuration of a beam shaping device 10 according to the embodiment. In addition to the transmissive optical element 200 used for formation of a Bessel beam, the beam shaping device 10 uses an annular zone phase element 100 having special properties. A laser light source 2 may be a laser light source, in which optical amplification is implemented by a pulse laser, such as, for example, a titanium-sapphire laser, and may be one in which wavelength is multiplied and amplification is performed further by an optical parametric amplifier (OPA) 4. After going through an optical system for adjustment (for example, a beam expander 6), as appropriate, and going through limitation of the beam diameter by an aperture 8; the laser light is adjusted to form parallel light or a Gaussian beam. The laser beam further enters the annular zone phase element 100. The annular zone phase element 100 has a function of imparting an axisymmetric phase distribution to the laser light. Since the function of the annular zone phase element 100 on the laser light is involved only in the phase impartment, the annular zone phase element 100 imparts no intensity distribution due to absorption or reflection, except for slight absorption or reflection by surface reflection or the like. The axisymmetric phase distribution being imparted by the annular zone phase element 100 means that the phase distribution imparted by the annular zone phase element 100 imparts a phase difference having no orientation dependency as seen from the target axis of that axisymmetry (the rotational axis). In a typical arrangement, the axis of symmetry (the rotational axis) of the annular zone phase element 100 is oriented to be aligned with the optical axis of the laser. The laser light imparted with the phase distribution by the annular zone phase element 100 subsequently enters the transmissive optical element 200. Typically, one side of the transmissive optical element 200 is a plane, and the other side thereof has a protruding surface that is an approximately conical surface having a conical axis that is an axis oriented perpendicularly to the plane. This protruding surface refracts light in a direction of converging the light at a destination extended from the conical axis. For a conventional Bessel beam, the central lobe has been realized just by the converging function due to the refraction by the transmissive optical element 200 without employment of the annular zone phase element 100, and this central lobe has been accompanied by side lobes as illustrated in FIG. 1. In this embodiment, the converging function of the transmissive optical element 200 is combined with the laser phase controlling function due to the axisymmetric phase distribution imparted by the annular zone phase element 100. In a typical arrangement of these elements according to the embodiment, not only the rotational axis of the axisymmetric phase distribution imparted by the annular zone phase element 100, but also the conical axis of the transmissive optical element 200 is aligned with the direction, in which the laser travels (the optical axis).

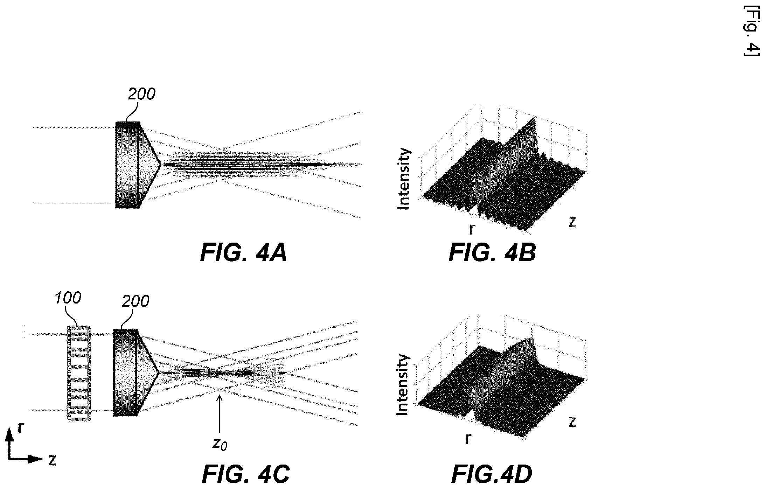

FIG. 4 is explanatory diagrams illustrating, based on calculated results, beam profiles of a conventional Bessel beam (FIG. 4A and FIG. 4B) and a tailored Bessel beam (FIG. 4C and FIG. 4D). These diagrams are: diagrams each illustrating, by density, intensity distribution on a plane including the optical axis (Z-axis) at a position after passage through the transmissive optical element 200 adopted commonly to both of these beams (FIG. 4A and FIG. 4C), and diagrams each illustrating an intensity distribution as a bird's-eye graph at cylindrical coordinates at distance r from the z-axis at that position (FIG. 4B and FIG. 4D). Differently from the one illustrated in FIG. 3, a beam shaping device that generates a conventional Bessel beam does not have the annular zone phase element 100. The conventional Bessel beam has multiple side-lobes formed in a coaxial multi-layered tube with the central lobe extending in the z-axis direction, and this is clearly illustrated in FIG. 4A and FIG. 4B. In contrast, in the tailored Bessel beam, for which the annular zone phase element 100 has been adopted, the side lobes have been weakened on the whole, and in particular, around $Z = Z_0$, where the central lobe distributed to extend along the optical axis reaches the maximum value, the side lobes have nearly been eliminated. These results indicate that in the tailored Bessel beam, reduction of the side-lobes has been realized without a significant sacrifice of the characteristics of the central lobe that are close to those of the conventional Bessel beam. Importantly, the additional ingenuity needed therefor is just the addition of the annular zone phase element 100 appropriately designed and fabricated. This can be said to indicate usefulness of the technique according to this embodiment.

1-3. Annular Zone Phase Element

1-3-1. Design

Next, the specific design concept and configuration of the annular zone phase element 100 illustrated in FIG. 3 and FIG. 4 will be described. A typical example of the annular zone phase element 100 according to the embodiment is a binary phase plate (BPP). Among examples of the annular zone phase element 100, the inventors of the present patent application particularly focused on a BPP having plural annularly zoned regions divided by at least one circle having its center on a rotational axis of an axisymmetric phase distribution. This BPP is typically a binary phase plate changed in thickness in each annularly zoned region and made of a light transmissive substance.

The super-resolution technique has been known as one of uses of BPPs (for example, NPL2 and NPL3). In NPL2, in addition to super-resolution enabling realization of a diffractive spot smaller than a spot size determined by the Airly limit, applicability of super-resolution to various kinds of beam shaping is disclosed. The principle adopted in the super-resolution technique disclosed in NPL3 is that, among light headed to a focal point of an imaging system, components that impart broadening of the focal point due to the diffraction limit and cause blurring are distributed (spread) to the side-lobes. In particular, a BPP is adopted in NPL3, and it is disclosed therein that for further narrowing of width of focused light at the focal position of the imaging optical system, only the components that broaden the focal point are intentionally distributed to side-lobes that are rather far, from a region near the focal point while unchanging the component that does not broaden the focal point (the component that is able to reach the center).

In contrast, the inventors propose a technique of transferring (collecting) components of light used for formation of side-lobes, to the central lobe of a Bessel beam, by use of the annular zone phase element, instead of aiming for increase and decrease of the beam diameter itself of the central lobe. The configuration of the annular zone phase element according to the embodiment is designed by optimization according to its purpose.

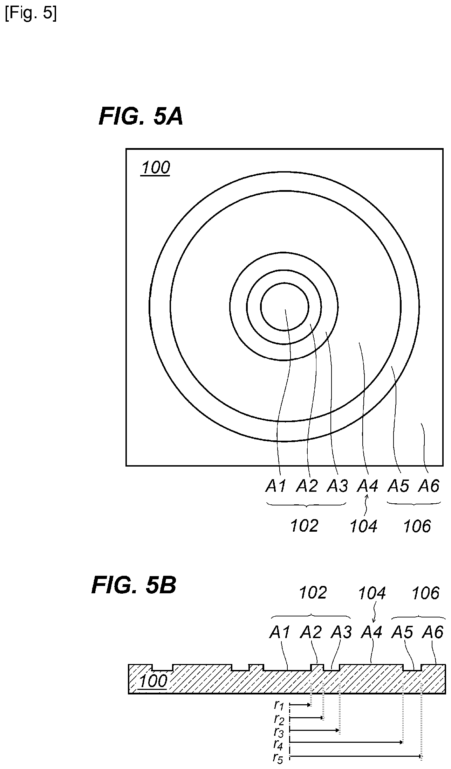

FIG. 5 is configuration diagrams illustrating a schematic configuration of a BPP fabricated by use of a light transmissive substance, the BPP being an example of the annular zone phase element 100 according to the embodiment, the configuration diagrams being a plan view (FIG. 5A) of the BPP, and a cross-sectional view at a position passing the center of the BPP (FIG. 5B). The annular zone phase element 100 is fabricated by use of a substance having transmissivity for light of a wavelength used, such as, typically, glass. Planer regions divided by concentric circles (having radii $r_1$, ..., and $r_M$, where M is an integer equal to or greater than 1) around the center of the plan view will be referred to as annularly zoned regions, or simply, annular zones. Among annular zones A1 to A6, the central annular zone A1 is circular, the annular zones A2 to A5 surrounding the central annular zone A1 are doughnut-shaped, and the outermost annular zone A6 has a shape of the planar shape of the substrate of the annular zone phase element 100, the shape leaving out a circle. However, the outermost annular zone A6 does not exhibit optical properties in a range not irradiated with a laser beam (for example, in a range outside the opening of the aperture 8). Each of the annular zones A1 to A6 is configured to impart a phase to light, the phase being different from that imparted to an annular zone adjacent thereto or those imparted to annular zones adjacent thereto. For example, if the annular zone phase element 100 is fabricated of a light transmissive substance, typically, a difference between thicknesses of adjacent annular zones is adjusted to have a phase difference of a mutual shift of $\pi$. For impartation of such phases, thickness of the light transmissive substance itself is adjusted. For setting of a BPP for optimal adaptation of an output beam to a required pattern, generally, the number of annularly zoned regions, the diameters of the circles that divide the annular zones, and the depths of the grooves are adjusted. For design of a BPP that imparts a 0 and $\pi$ binary phase distribution, the depth of the level difference determining the phase difference is fixed to a depth that causes a phase shift worth $\pi$, and optimization is performed on the number of annularly zoned regions M and the radius $\{r_m\}$ of the circle serving as a divider of the respective annular zones.

An ideal Bessel beam is formed when an axicon is illuminated by a plane wave. Mathematically, the complex amplitude of an ideal Bessel beam may be modeled as follows, where the intensity distribution is $I(r,z) = J_0^2 (k_t r)$.

$$E(r, z) = \exp(i\,k_z z)\,\mathrm{J}_0(k_t r)$$

$$(1)$$

In the expression of Equation (1), r and z are the radial direction and longitudinal direction coordinate values, k is the wave vector, and $k_t = k \sin\alpha$ and $k_z = k\cos\alpha$, where $\alpha$ is the ray angle relative to the optical axis.

It may be understood that an ideal Bessel beam having infinite energy is unbounded, invariant, and totally diffraction-free during propagation, but such an ideal Bessel beam is not existable in reality. In many practical uses, approximations are made for generation of Bessel-Gaussian beams by focusing of Gaussian beams through axicons. In the present application, beams referred to as conventional Bessel beams are distinguished from an ideal (theoretical) Bessel beam, but are actual beams generated only by effects of axicons. If an axicon is an ideal one, that is, an axicon with the apex of the cone being ideally sharp, the intensity distribution of a conventional Bessel beam generated by the axicon is able to be found by an analytical method where the Fresnel diffraction integrals are solved.

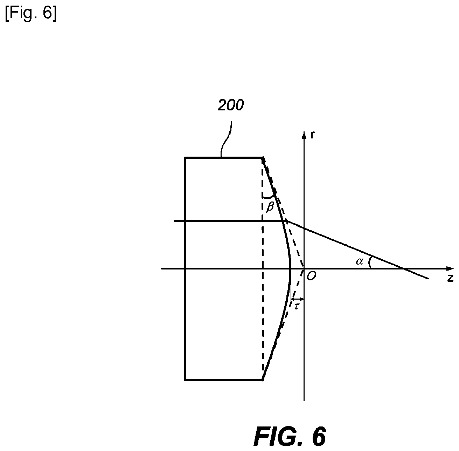

In the present patent application, a shape model of an axicon having roundness near the apex is adopted for accurate design of BPPs, and specifically, the surface of the axicon is assumed to be a hyperboloid of revolution of two sheets. FIG. 6 is an explanatory diagram illustrating the actual shape of an axicon, which is an example of the transmissive optical element 200 according to the embodiment. The transmissive optical element 200 is ideally fabricated to have a conical surface according to the base angle $\beta$. However, shapes of actual axicons are not made just as the shape of a geometrical conical surface, because of certain constraints in terms of their manufacturing process, and have more roundness near the apices as compared to a conical surface determined by the base angle at the periphery of a conical surface. In an actually measured example, the distance $\tau$ between the apex of the hyperboloid of an axicon having a base angle $\beta$ of 20° and the apex of an ideal axicon was determined to be 21 $\mu$m. When precise beam shaping is carried out, advanced design does not necessarily lead to practical use if such deviation in shape from the design is unable to be dealt with, but such deviation is not a problem in reduction of side-lobes by the annular zone phase element 100 proposed through this embodiment. Upon simulation, as long as only phases are treated, the diffraction in both the aperture 8 (FIG. 3) and the BPP for the annular zone phase element 100 is not considered in the calculation. Further, a numerical method based on Hankel transformation is adopted for simulation of propagation of a beam that has passed filters (the aperture and BPP) and the axicon. Thus, the light field (z = 0) right behind an axicon having roundness is expressed as follows.

$$E(r,0) = E_{in}T(r)\exp(inkd)\exp\left[ik(n_0 - n)\sqrt{\tau^2 + r^2\tan^2\beta}\right]$$

$$(2)$$

Herein, $E_{in} = \exp(-r^2/w_{in}^2)$ is the field of the incident Gaussian beam, where $w_{in}$ is the beam waist, and n and $n_0$ are the refractive indices of the axicon and the outside medium, respectively. It should be noted that a thin axicon is being considered, the thin axicon having a maximum thickness d, and z = 0 set at the apex of an ideal axicon. Further, T(r) is the transmission function of the BPP, and may be written as follows.

$$T(r) = \left(-1\right)^{M-1}\cdot\mathrm{circ}\left(\frac{r}{r_M}\right) + \sum_{m=1}^{M-1}\left(-1\right)^{m+1}\cdot 2\,\mathrm{circ}\left(\frac{r}{r_m}\right)$$

$$(3)$$

Herein, $r_m$ is the radius of the m-th annular zone region, M is the total number of the annular zone regions, and circ$(\cdot)$ is a circle function defined as follows.

$$\mathrm{circ}\left(r\right) = \begin{cases} 1, r \leq 1 \\ 0, r > 1 \end{cases}$$

$$(4)$$

Since the transmission function T(r) of the BPP defined by Equation (3) is determined only by r and $r_m$, the transmission function T(r) can be said to be an axisymmetric function having the x-axis as the rotational axis. The definition of T(r) in Equation (3) is for simple representation of the BPP where phase values that are phase differences from a phase reference imparted to light are only 0 and $\pi$. It should be noted that all of the explanation including that on T(r) in Equation (3) is similarly applicable to annular zones having arbitrary phase quantities. According to the definition of T(r) for annular zones having arbitrary phase quantities, a more general phase quantity $\varphi_m$ (m = 1 to M) is imparted to each annular zone, and $(-1)^{m+1}$, which is a phaser immediately after the summation symbol ($\Sigma$) in Equation (3), is rewritten as $\exp(i\varphi_m)$ (where i is the imaginary unit).

By execution of Hankel transformation of E(r, 0) in the cylindrical coordinate system, the spatial-frequency spectrum of the field at z = 0 is found as follows.

$$S(\xi,0) = k\int_0^R E(r,0)\,\mathrm{J}_0(k\xi r)r\mathrm{d}r$$

$$(5)$$

Herein, R is the size (radius) of the pupil of the axicon. Subsequently, the spectrum in the spatial domain is propagated by a distance of z, by application of an angular-spectrum approach, and the following is obtained.

$$S(\xi,z) = S(\xi,0)\exp(\mathrm{i}\,k_z z)$$

$$(6)$$

Herein, $k_z = k(1 - \xi^2)^{1/2}$ is the wave vector in the propagation direction. Thus, the field propagating a distance z after passage through the axicon having roundness is obtained by inverse Hankel transformation of $S(\xi, z)$ as follows.

$$E(r, z) = k\int_0^1 S(\xi,z)\,\mathrm{J}_0(k\xi r)\xi\,\mathrm{d}\xi$$

$$(7)$$

It is worthy of special mention that parabolic sampling is adopted for Equations (5) to (7) for increase in the computing speed in the numerical simulation. For obtainment of the optimal structure of the BPP, an appropriate cost function needs to be determined and minimization thereof needs to be executed. In this patent application, side-lobe ratios (SLRs) over a certain axial direction range $[z_{max}$-l, $z_{max}$+l], that is, ratios of maximum side-lobe peaks to the peaks of the central lobes are found, and an average of these ratios is used as is as the cost function, and specifically, the cost function is expressed as follows.

$$\overline{SLR} = \frac{1}{2l}\int_{z_{max}-l}^{z_{max}+l} \frac{I_1(z)}{I_0(z)}\,\mathrm{d}z,$$

$$(8)$$

Herein, $I_0(z) = |E(0,z)|^2$ is the on-axis intensity of the beam (also the intensity of the peak of the central lobe), $I_1(z)$ is the intensity of the brightest side-lobe, and 2l (two ell) prescribes a beam axis direction focusing range of the central lobe, and is the length of the searching window in the optimizing algorithm described next.

In the procedure of optimization, the simulated annealing (SA) algorithm was adopted with parameters to be optimized being (M, $\{r_m\}$), for a favorable balance between the convergence speed and the optimizing effect during computing, and optimal fitting in optimization of multiple variables.

Based on the above method, calculation for confirmation of effectiveness of side-lobe reduction by use of actual BPPs was executed, and accomplishment by the embodiment was investigated in a step-by-step manner. Specifically, two sets of radii of outer peripheral circles of annularly zoned regions were chosen such that tailored Bessel beams with different DOFs and SLRs were able to be formed. That is, correspondingly to $[z_{max}$ - 100, $z_{max}$ + 100] um, in a first example where a BPP is used, $\{r_{1m}\} = \{78.7, 130.5, 225.6, 1823.6, 1872.4\}$ was adopted. The conditions for employment of the BPP of this specific design, and the BPP itself, which is the annular zone phase element 100 fabricated under these conditions, will hereinafter be referred to as a BPP1. Similarly, correspondingly to $[z_{max}$ - 50, $z_{max}$ + 50] um, in a second example, $\{r_{2m}\}$ = {145.5, 185.0, 200.0, 1695.8, 1919.5} was adopted. Similarly, these conditions and the BPP itself will similarly be referred to as a BPP2.

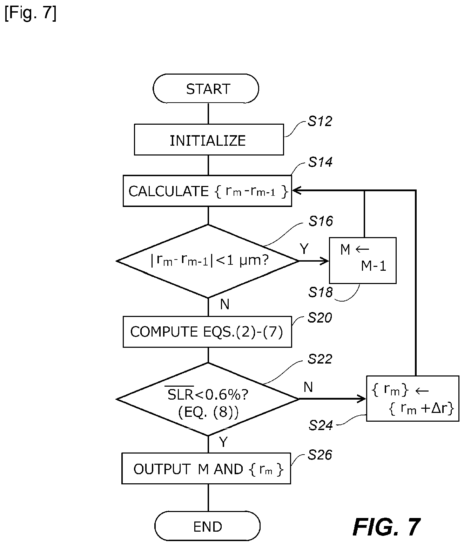

The optimization process for the parameters (M and $\{r_m\}$) by the above described SA algorithm will now be described based on FIG. 7. At Step S12 for initialization, substitution of M and $r_m$ serving as initial conditions of optimization is executed. In calculated examples where the above described configurations of the BPP1 and BPP2 each serving as the annular zone phase element 100 are derived, the initial value of M is 7, and appropriate numerical values are given, as a set $\{r_m\}$ of radii of outer peripheral circles of the annularly zoned regions (m = 1 to 7), from a range representing element sizes determined according to radii or beams. In the calculated examples, a sequence of random numerical values was arranged in ascending order in a range of [0, 2] (mm) and the arrangement was adopted as is. Subsequently, at Step S14 for constraint parameter calculation, a set of annular zone widths $\{r_m - r_{m-1}\}$ is found from $\{r_m\}$. At Step S16 for annular zone width determination, if the value of $|r_m - r_{m-1}|$, which is the annular zone width, has become too narrow as compared to the lower limit value of annular zone width (S16: branch Y), Step 18 for annular zone reduction for subtraction of M is executed, and the process is advanced to Step S14 for constraint parameter calculation again. The lower limit value of annular zone width is determined in consideration of the limit value according to the fabrication process, and in the calculated example, was set at 1 μm. If the annular zone width does not become too narrow (S16: branch N), Step S20 for light field calculation is executed according to Equation (2) to Equation (7) described above. According to Equation (8), the average of SLRs serving as the evaluation function is calculated according to Equation (8), and Step S22 for side-lobe determination where the average is compared with a determination reference value (for example, 0.6%) is executed. If the average of SLRs has not been decreased to the determination reference value, the series of calculations starting from Step S14 for constraint parameter calculation is repeated again via Step S24 for update where each value of $\{r_m\}$ that is the set of radii of outer peripheral circles of the annularly zoned regions is increased or decreased by addition of a random numerical value $\Delta r$. If the average of SLRs becomes less than the determination reference value, at Step S26 for output, the parameters (M and $\{r_m\}$) at that time point are output as optimized results. Processing according to the SA algorithm is executed when the random numerical value used in the update at Step S24 for update is determined. In the above described calculation for the BPP1 and BPP2, a different set of radii of outer peripheral circles is obtained correspondingly to one value of Equation (8). For both the BPP1 and BPP2, M was decreased to 5.

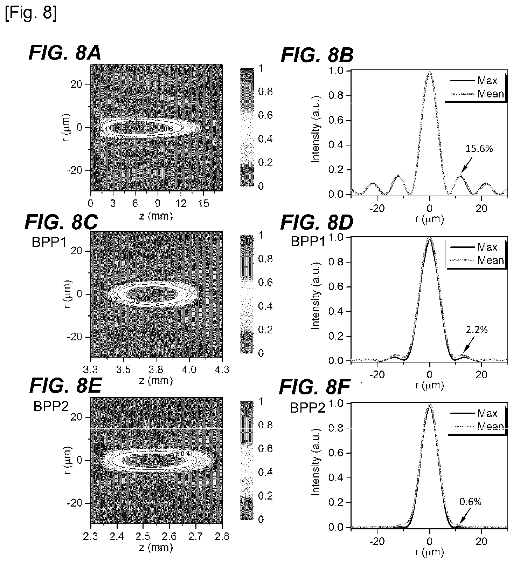

FIG. 8 is graphs each representing a beam profile based on simulation calculation for a beam propagation direction (FIG. 8A, FIG. 8C, and FIG. 8E) and a direction orthogonal to the beam (FIG. 8B, FIG. 8D, and FIG. 8F) for transverse direction and longitudinal direction beam profiles, and is obtained by employment of each of a conventional Bessel beam (FIG. 8A and FIG. 8B), and the BPP1 (FIG. 8C and FIG. 8D) and the BPP2 (FIG. 8E and FIG. 8F), which are two typical examples of the annular zone phase element. For the direction orthogonal to the beam, the beam profile at the peak position of the central lobe (Max) and the beam profile based on the average over the beam propagation direction (Mean) are illustrated. The beam waists (diameters), DOFs, and SLRs therein were obtained, as listed in Table 1.

[Table 1]

| | $2w_0$ | $z_{DOF}$ | $SLR_m$ | $\overline{SLR}$ |
|---|---|---|---|---|
| Conventional Bessel beam | 6 μm | 12.4 mm | 15.6% | 15.8% |
| Tailored Bessel beam (BPP1) | 7 μm | 530 μm | 2.2% | 2.8% |
| Tailored Bessel beam (BPP2) | 6 μm | 280 μm | 0.6% | 0.7% |

In Table 1, $2w_0$ is the beam waist of the central lobe, which is the diameter determined at the FWHM. Further, $z_{DOF}$ is the DOF, and is measured as the FWHM along the optical axis. Furthermore, $SLR_m$ is a side-lobe ratio at $z = z_{max}$, and the SLR bar is a side-lobe ratio calculated from the intensity of the average value over the optimized axial direction range $[z_{max} - 1, z_{max} + I]$.

Furthermore, obtainment of the above described characteristics means, when seen, for example, in terms of TSV formation for machiing of silicon wafers, that BPPs are potentially applicable to fabrication of high-aspect-ratio TSVs. In a case where multi-photon absorption whose quantity serving as a measure of absorption (the cross-sectional area of absorption) nonlinearly depends on the laser intensity is adopted, the reduced SLR works even more effectively especially when the side-lobe damages are attempted to be minimized for TSV fabrication where femtosecond (fs) laser having a wavelength of 1.5 μm is used for machining of a silicon wafer, for example.

1-3-2. Function of Annular Zone Phase Element

The length of the central lobe of a tailored Bessel beam realized by this embodiment is shorter than that of a conventional Bessel beam, the length extending in the beam axis direction. That is, while a conventional Bessel beam has a DOF of about 12 mm, when the BPP1 and BPP2 were adopted, their DOFs were found to be about 530 μm and about 280 μm, respectively (Table 1). This point is generally related to roles of side-lobes in Bessel beams. In a Bessel beam, for realization of a central lobe extending in the beam axis direction, light from positions at different radii in an axicon is caused to be propagated along conical surfaces mutually having the same apex angle and to converge at different positions on the beam axis. Therefore, light forming side-lobes on a certain plane orthogonal to the beam axis may contribute to the central lobe when viewed on another plane cutting the beam axis at a position different from that of that certain plane. Therefore, when side-lobes are reduced on the certain plane, light forming the central lobe at the different position on the beam axis will be deficient. This means that for reduction of side-lobes, the DOF needs to be limited to a certain range in the beam axis direction. However, for a use where the intensity of light is increased in the aimed limited range of DOF, such as machining, a DOF that is too large only leads to dispersion of energy and lack of intensity. Weakening of side-lobes corresponding to the aimed range of DOF just means weakening of energy that has been distributed thereto, that is, energy that has been forming the central lobe at a DOF outside the aimed range, and thus has very little influence other than the reduction of what has been useless. Rather, light that becomes side-lobes and forms the central lobe at a DOF outside the aimed range in a conventional Bessel beam ultimately contributes to the central lobe in the aimed DOF by the function of the annular zone phase element 100. That is, the annular zone phase element 100 designed appropriately according to this embodiment can be said to have the function of concentrating the light that has been distributed to side-lobes, to the central lobe of the aimed range, and to realize more efficient machining. This function of the annular zone phase element will be described again after description of results of experiments.

1-3-3. Experiments with Actual BPPs

BPPs for the designed annular zone phase element 100 were fabricated by a photolithographic method. Upon the fabrication, the BPPs were each made of a BK7 glass substrate (having a thickness of 1.5 mm, and a size of 16 mm $\times$ 16 mm). A photoresist was spin-coated on the glass substrate and patterned according to the designed shape, and the glass was then etched such that a phase delay of $\pi$ radians, that is, a half-wavelength, was imparted. A level difference that imparts the phase delay of $\pi$ radians to the transmitted light according to the refractive index (1.501) at the wavelength of 1.5 $\mu$m that was used, was calculated to be 1.50 um. In contrast, the finished level differences in the annular zone phase elements 100 were actually measured to be 1.60 um (BPP1) and 1.65 um (BPP2). The annular zone phase elements 100 were transparent, and were each made such that the annular zones were alternately phased with 0-radian and substantially $\pi$-radian phase shifts in order from the rotational axis.

1-4. Performance of Tailored Bessel Beams

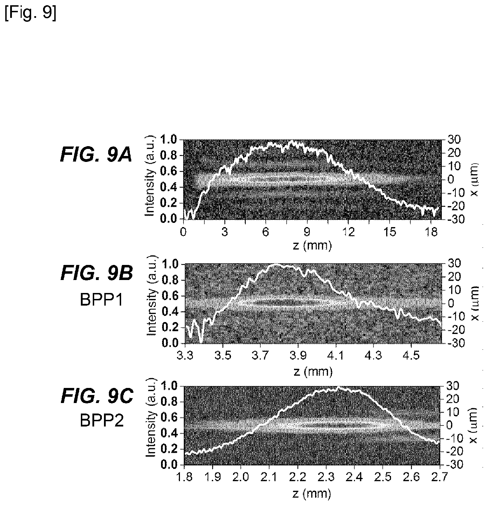

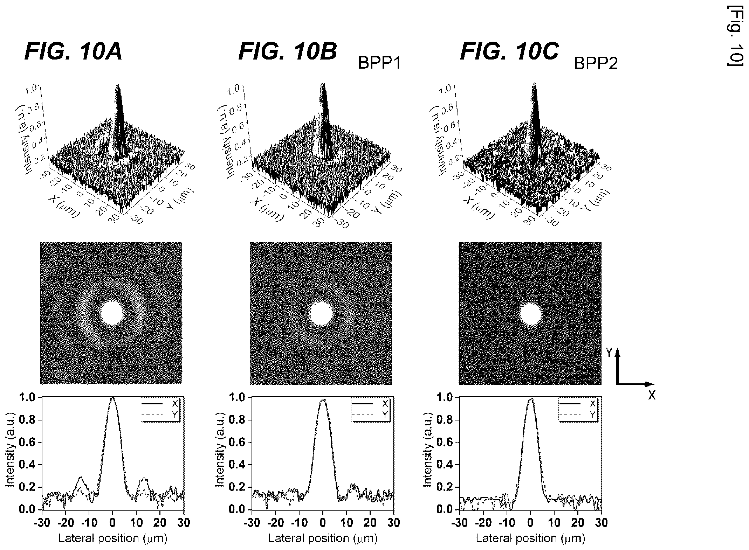

Side-lobe reducing performance of tailored Bessel beams was experimentally evaluated. FIG. 9 is transverse direction and longitudinal direction beam profiles obtained experimentally, where a conventional Bessel beam (FIG. 9A), and the BPP1 (FIG. 9B) and BPP2 (FIG. 9C) that are examples of the annular zone phase element 100, have been adopted. Further, FIG. 10 is intensity distributions of beam cross-sections near peaks (top), images thereof (middle), and intensity profiles (bottom), which have also been experimentally obtained, and which are those of a conventional Bessel beam (FIG. 10A), and those for the BPP1 (FIG. 10B) and BPP2 (FIG. 10C) that are examples of the annular zone phase element 100. These measurements were obtained by: arrangement of a light transmissive screen at a position opposite to the exit side of the transmissive optical element 200 in FIG. 3; and measurement of the quantity of laser light transmitted through the screen at each position on the screen by use of: an objective lens for microscope arranged at a place opposite to the transmissive optical element 200 with the screen interposed between the transmissive optical element 200 and the objective lens; and a CCD camera placed at an image formation position of the objective lens; and these measurements are those of positions along the optical axis direction where the central lobes become peaks. For avoidance of influence on the measurement system, the laser intensity was made lower than that used for machining or the like.

FIG. 9A is the on-axis profile (the outlined curve in the figure) and a typical beam profile on the XZ plane (the density image), of the conventional Bessel beam. The DOF estimated at the full width at half maximum along the optical axis was 12 mm, and intensity modulation along the beam propagation direction was observed. These values were in good agreement with those calculated in consideration of the axicon having roundness. Next, measurements on the tailored Bessel beams by arrangement of the BPP1 and BPP2, which are examples of the annular zone phase element 100, in front of the transmissive optical element 200 were carried out. For BPP1, it was confirmed that a beam with $z_{max}$ = 3.8 mm and $z_{DOF}$ = 600 $\mu$m had been generated. These values were in accordance with those of theoretically designed parameters. As for the BPP2, $z_{max}$ = 2.35 mm and $z_{DOF}$ = 420 $\mu$m were obtained, and thus some discrepancy between these values and those calculated was found. The inventors attribute this discrepancy to the somewhat poor quality of the incident beam and the limited fabrication resolution of the BPPs.

Furthermore, patterns at the position z = $z_{max}$ were investigated for the conventional Bessel beam and the tailored Bessel beams through the BPP1 and BPP2. This is because beam profiles are important in TSV fabrication. As illustrated in FIG. 10, it was confirmed that by employment of the BPPs that are examples of the annular zone phase element 100, the side-lobes of the Bessel beams were effectively reduced, and the BPP2 produced results that were even more desirable. These match the calculated results well.

As described above, with a simple configuration having the annular zone phase element 100 added to the transmissive optical element 200, such as an axicon, the beam shaping device 10 according to the embodiment enables sufficient reduction of side-lobes. If a tailored Bessel beam with reduced side-lobes is able to be realized by such a simple means, arbitrary uses of laser using the central lobe extending in the optical axis direction will be practical. Further, the side-lobe reducing performance with hardly any absorption of laser just by the addition of the annular zone phase element 100 is particularly useful for a use where the intensity of laser is utilized.

1-5. Concentration of Light of Side-Lobes to Central Lobe

Light passing near the center of an axicon is focused at a position on the beam axis close to the axicon, and light passing near the periphery of the axicon is focused at a position on the beam axis far from the axicon. Details of the function of the annular zone phase element 100 will be described in consideration of, in particular, the actually designed numerical values related to the BPP1 and BPP2. By reference to FIG. 5 again, the annular zone phase element 100 imparts a phase distribution axisymmetric about the rotational axis, through the annular zones A1 to A6. These annular zones A1 to A6, more generally, portions affecting the laser light (for example, portions where laser not shielded by the aperture 8 reaches), in a range including the plural annularly zoned regions, are broadly classified into regions not overlapping one another, which are a central region 102 including the rotational axis, an intermediate region 104 surrounding the central region 102, and a peripheral region 106 surrounding the intermediate region 104.

In FIG. 5, the central region 104, the intermediate region 106, and the peripheral region 106 are made to correspond to the annular zones A1 to A6. In FIG. 5A and FIG. 5B, the central region 102 includes the annular zones A1 to A3, and the peripheral region 106 includes the annular zones A5 and A6. The intermediate region 104 is either: the entire annular zone A4; or a ring-shaped portion in the annular zone 104, the ring-shaped portion excluding regions near the inner diameter and outer diameter of the annular zone A4. As illustrated in FIG. 5A and FIG. 5B, in the central region 102 and the peripheral region 106, due to the change in thickness from the annular zone A1 to the annular zone A4 and the change in thickness from the annular zone A4 to the annular zone A6 respectively, nonconstant phase that changes according to position is imparted to the laser light. In contrast, in the intermediate region 104, due to the constant thickness of the annular zone A4, constant phase, which does not change even if the position changes, is imparted to the laser light.

The phase distribution imparted through the changing phase in the central region 102 and the peripheral region 106, and the nonchanging phase in the intermediate region 104 is related to the above described effect that the light to be distributed to the side-lobes is concentrated at the central lobe. That is, laser light passing through the intermediate region 104 is propagated without large disturbance in its wavefront, and converges toward, for example, the vicinity of $z_0$ (FIG. 4C) due to the refracting function of the transmissive optical element 200. Light passing through the intermediate region 104 follows the phenomenon where a conventional Bessel beam is formed by an axicon. In contrast, nonconstant and changing phase is imparted to laser light passing through the central region 102 and the peripheral region 106, and thus destructive interference is occurred. Although laser light that has passed through the central region 102 should have reached a position ($z < z_0$) closer than $z_0$ in response to refraction of the transmissive optical element 200, the laser light heading toward that position is actually weakened due to the destructive interference. Laser light at a far position ($z > z_0$) corresponding to the peripheral region 106 is weakened in a similar manner. From the relation between the position where the destructive interference occurs in the annular zone phase element 100 and the position corresponding thereto on the beam axis, it is impossible for light that has passed through the annular zone phase element 100 to reach the close position ($z < z_0$) nor the far position ($z > z_0$) in the beam axis direction of the center lobe. Since only the intermediate region 104 corresponding to the beam axis direction $z_0$ propagates the laser therethrough without being disturbed by such an effect, the annular zone phase element 100 has the function of collecting the light that has passed therethrough toward an annular range where the laser light transmitted through the intermediate region 104 is propagated. The annular zone phase element 100 thus exerts its beam axis direction compression function around $z_0$. This beam axis direction compression occurs with reduction of light of side-lobes at the position $z_0$ as described above, and is thus equivalent to reduction of side-lobes, and is a cause of the function of collecting light from the side-lobes onto the central lobe.

It should be noted that the above qualitative explanation also applies to a design screened from many computer experiments based on the optimization process (FIG. 7) of parameters (M and $\{r_m\}$) by the above described SA algorithm. For example, as to the specific numerical values related to the BPP1 and BPP2, the BPP1 and BPP2 change in thickness in regions corresponding to their central regions 102 and their peripheral regions 106, and are constant in thickness in their intermediate regions 104 therebetween. If their intermediate regions 104 are seen as the regions of the annular zones A4 of a radius $r_3$ to a radius $r_4$, the widths of the annular zones A4 of the BPP1 and BPP2 both account for about 1.5 mm of the calculated range where the laser is transmitted (a radius of 2 mm). The regions around the inner diameter and the outer diameter of the annular zone A4 contribute also to the destructive interference due to the influence of the phase imparted to the laser light in the annular zone A3 inside the annular zone A4 and in the annular zone A5 outside the annular zone A4, but the central portion having the width of about 1.5 mm of the annular zone A4 is not related to the destructive interference. That is, both the BPP1 and BPP2 can be said to exhibit the function following the above qualitative explanation. Specific ranges of the central region 102, the intermediate region 104, and the peripheral region 106, and how many annular zones should be included in each of the central region 102 and the peripheral region 106 both depend on the design. Such specific design may be determined according to, for example, the diameter of the laser beam and the size of DOF. However, since constant and nonchanging phase is imparted in the intermediate region 104, the intermediate region 104 corresponds to only one annular zone at most. Further, an annular zone phase plate, which enables the operation of focusing light onto the center lobe from side-lobes through division of the region into the central region 102, the intermediate region 104, and the peripheral region 106, is not necessarily a binary phase plate, and may be a phase plate of another form that imparts a phase.

## 2. Subtractive Machining Apparatus

### 2-1. Overall Configuration

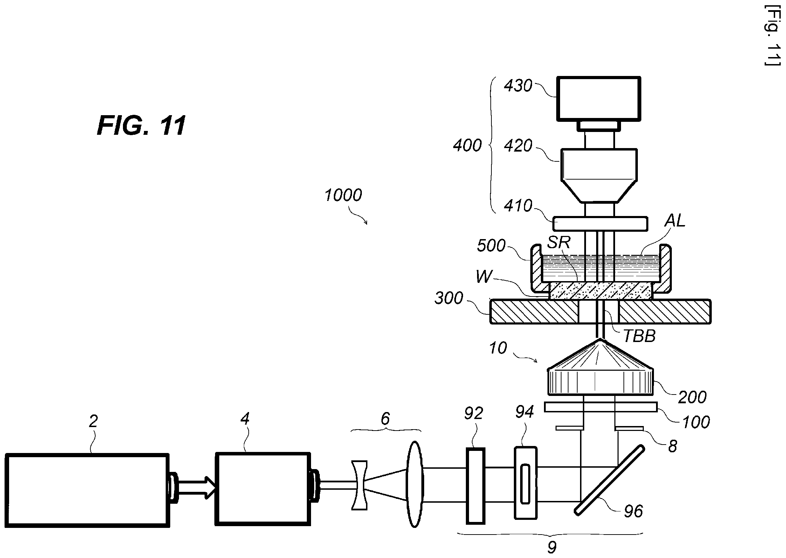

According to the present invention, an embodiment of a subtractive machining apparatus that uses a tailored Bessel beam is also provided. FIG. 11 is a configuration diagram illustrating a configuration of a subtractive machining apparatus 1000. Hereinafter, a case where a silicon substrate serves as a semiconductor substrate to be machined will be described. The subtractive machining apparatus 1000 includes the beam shaping device 10 illustrated in FIG. 3 in a part thereof. Configuration for laser incident on the beam shaping device 10 is the same as the configuration in FIG. 3 except for addition thereto of an additional optical system 9 (a variable ND filter 92, a shutter 94, and a mirror 96) for installation and control of adjustment of the laser intensity and the pulse irradiation time for machining. The following description includes a case where a conventional Bessel beam is generated without the annular zone phase element 100 for comparison and machining is performed thereby, and a case where conditions of a tailored Bessel beam are changed by change to the BPP1 and BPP2. Pulsed laser having a wavelength (for example a wavelength of 1.5 $\mu$m) that is able to reach inside a silicon substrate is emitted from the light source 2. Through impartment of a phase distribution by the annular zone phase element 100, a beam is converged by the transmissive optical element 200 into a tailored Bessel beam TBB. A peak range of each tailored Bessel beam TBB suitable for machining is, as illustrated in FIG. 9B and FIG. 9C, more limited in its optical axis direction range than that of a conventional Bessel beam (FIG. 9A), but still maintains a length of about 200 $\mu$m. Therefore, if, for example, a workpiece W is a silicon wafer that has been made into a thin board, at least machining of that thickness (for example, a thickness of 100 $\mu$m) is not difficult to be realized with this peak range.

For example, a workpiece W that is a silicon wafer is temporarily fixed, as necessary, to a stage serving as a positioning device 300. This positioning device 300 does not hinder incidence of a tailored Bessel beam TBB on the workpiece W. The state of subtractive machining is imaged through an observation optical system 400, as necessary. The observation optical system 400 is similar to an optical system of an ordinary optical microscope, and acquires an image of a surface of the workpiece W through an objective lens 420 with a camera 430, the surface being the upper surface on the plane of paper. A filter 410 that prevents light of a wavelength for subtractive machining from reaching the camera 430 when a through hole has been formed is arranged, as appropriate, in the observation optical system 400. An image or a video from the camera 430 is processed, saved, or displayed, as necessary.

A tailored Bessel beam TBB still continues to maintain its performance as a tailored Bessel beam with its energy focused onto the central lobe and its side-lobes reduced, also inside the workpiece W. Even if the tailored Bessel beam TBB is refracted upon incidence from outside on the workpiece W, its wavefront is a conical surface although its apex angle changes, and is propagated still being converged to the beam axis. Further, phase change due to the annular zone phase element 100 also influences the laser reaching the workpiece W. For example, due to the influence of refraction, the far end position of the central lobe is influenced by the existence of the workpiece or the thickness of the workpiece. This influence can be explained by the change in direction of the wavefront due to the refraction, and is a just positional change associated with the geometric change of the wavefront. The term, "central lobe", throughout the present patent application refers to a range where the peak is actually obtained, including, not only a case where a central lobe of a tailored Bessel beam as illustrated in FIG. 1 is formed in a space (in a vacuum or in the air), but also a case where a part or all of the central lobe is positioned in a refractive index medium. If, for example, the positional relation between light and the refractive index medium is changed by positioning or the like, the central lobe of the generated tailored Bessel beam may change according to the change in the positional relation.

### 2-2. Laser

Selection of laser according to this embodiment is closely related to the principle of subtractive machining. The wavelength is typically set at a long wavelength where a workpiece does not exhibit strong absorption. If this is not satisfied and absorption is strong, light will not reach inside the workpiece, and a tailored Bessel beam is not formed inside the workpiece. Laser suitable for a case where the workpiece W is a silicon substrate has a wavelength longer than 1.13 $\mu$m corresponding to the bandgap of single crystal silicon (1.12 eV), and this wavelength is, for example, 1.5 $\mu$m. Even if a semiconductor substrate of another type serves as a workpiece, a laser wavelength longer than the absorption wavelength band of that workpiece is selected. However, if a tailored Bessel beam is attempted to be formed only at a surface of a workpiece, a nontransparent beam shorter in wavelength may be used.

For the purpose of increasing the practicability of subtractive machining, obtaining high optical intensity, including positionally limiting the range of intense light by a tailored Bessel beam, is effective. Increasing the amplitude of the optical electric field is effective for causing multiphoton absorption by the material inside the workpiece in the central lobe of the removal target path. Therefore, the amplitude of the optical electric field is preferably increased by decrease in the pulse width (pulse duration) of the laser pulse. As the pulsed laser of a light source to be used, laser enabling pulsed oscillation, or pulse-excited laser may be used, and as necessary, pulse compression on the time axis by an arbitrary technique, such as beam compression, may be utilized further.

If the light source is a pulsed laser, optical crystal may be used for appropriate setting of the above described wavelength. The above described optical parametric amplifier (OPA) 4 is useful for both facilitation of the adjustment of wavelength and satisfaction of the pulse oscillation requirement. However, if a laser that is able to conduct pulse operation at a desired wavelength with a desirable pulse width by itself is available, the OPA 4 is not needed.

2-3. Machining Principle

As described above, in this embodiment, nonlinear absorption, in particular, multiphoton absorption, is utilized. If the optical electric field has been spatially and temporally compressed and has become strong, due to the effect significantly intensified electric field through coherent superposition, plural transitions via virtual levels are able to be simultaneously stimulated. The shorter the pulse width of laser is, the higher the probability of such transitions via virtual levels becomes, but as long as the pulse width corresponds to a time period of about a length, in which the excited electrons are relaxed and heat produced thereby is dissipated, a sufficient transition probability is able to be obtained, and nonthermal and excellent ablation machining is able to be executed. Further, the probability of multiphoton absorption is increased by increase in amplitude of the electric field, and thus until the light reaches the peak position (the z-axis in FIG. 1), the probability of multiphoton absorption is small. That is, occurrence of multiphoton absorption does not mean occurrence of the usually meant absorption before reaching the peak position. If a conventional Bessel beam is adopted, many side-lobes that are less intense than the central lobe are generated such that these side-lobes have local maxima at positions of cylindrical surfaces coaxial with the beam axis. If the optical electric field is intense, since there is probabilistically a possibility that absorption will occur at the side-lobes also, energy to the central lobe is reduced.

As illustrated in FIG. 11, the workpiece W is fixed to the positioning device 300 at least temporarily. The positioning device 300 operates to adjust the relative position of the workpiece W to the peak range.

2-4. Improvement with Assisting Liquid

Next, an embodiment where an assisting liquid is used will be described. In FIG. 11, an assisting liquid vessel 500 and an assisting liquid AL, which are components for the embodiment where the assisting liquid is used, are also illustrated. The assisting liquid AL is in contact with a second surface SR opposite to a first surface of the workpiece W, the first surface being on the entrance side of the workpiece W. A removal target path set for the workpiece W reaches and terminates at the second surface SR. The positioning device 300 performs positioning so that the central lobe passing inside the workpiece W reaches the assisting liquid, the central lobe being that of a tailored Bessel beam pulse from the transmissive optical element 200.

The assisting liquid AL has a function of assisting etching of the workpiece W from the second surface SR side thereof upon receipt of laser light that has passed through the workpiece W and has exited from the second surface SR. An arbitrary liquid having such a function is adopted as the assisting liquid according to this embodiment. One example of the assisting liquid is an aqueous solution of silver nitrate ($AgNO_3$).

When the assisting liquid AL is used, even in a case where a peak intense enough to cause ablation is not obtainable, subtractive machining limited to the peak range is enabled. For example, if the workpiece W is thick, even if a wavelength of laser reachable inside the workpiece W is set appropriately, a sufficiently intense peak is sometimes not obtained, particularly near the exit surface, due to multiphoton absorption or the like caused at a low probability. Even in such a case, if etching is promoted from the second surface SR side by the assisting liquid, machining is facilitated. In this case also, since side-lobes have been reduced in the tailored Bessel beam, unintended machining at positions of the side-lobes is able to be prevented.

2-5. Examples of Subtractive Machining

Next, examples of subtractive machining according to the embodiment will be described. Materials, amounts of the materials used, ratios among the amounts, details of treatments, treatment sequences, orientations and specific arrangements of elements or members, and the like may be modified as appropriate without departing from the scope of the present invention, as defined by the claims. Therefore, scope of the present invention is not limited to the following specific examples. In the following description, the drawings that have been described thus far will be referred to also, and the same reference signs will be used for the elements already described.

TSV fabrication performance of the conventional Bessel beam and tailored Bessel beams described with respect to FIG. 9 and FIG. 10 was checked. As the workpiece W, a silicon wafer was adopted, and for simplification, the silicon wafer was fixed relatively to the beam. The pulse energy was set slightly higher than a threshold for formation of through holes for each beam, and the number of shots (the number of pulses) was optimized to a value that minimized the taper angle of the TSVs.

For the conventional Bessel beam, the optimized pulse energy and number of shots were determined to be 196 $\mu$J and 500 shots, respectively. The inventors attribute the increase in pulse energy to the large ratio of the side-lobes of the conventional Bessel beam, and consider the increase in pulse energy to be equivalent to production of a long $z_{DOF}$. When the BPP1 and BPP2 were adopted for TSV fabrication, the values of pulse energy required were able to be reduced to 135 $\mu$J and 47 $\mu$J, respectively, and the optimized numbers of shots became 800 shots for both of these BPPs. Importantly, by the employment of these BPPs, the pulse energy required for TSV fabrication is able to be significantly reduced because the side-lobes of the Bessel beams are reduced and the energy is more concentrated on the formation of their central lobes. For both the conventional Bessel beam and tailored Bessel beams, during the TSV fabrication, $z = z_{MAX}$ was adopted for front surfaces of the silicon samples.

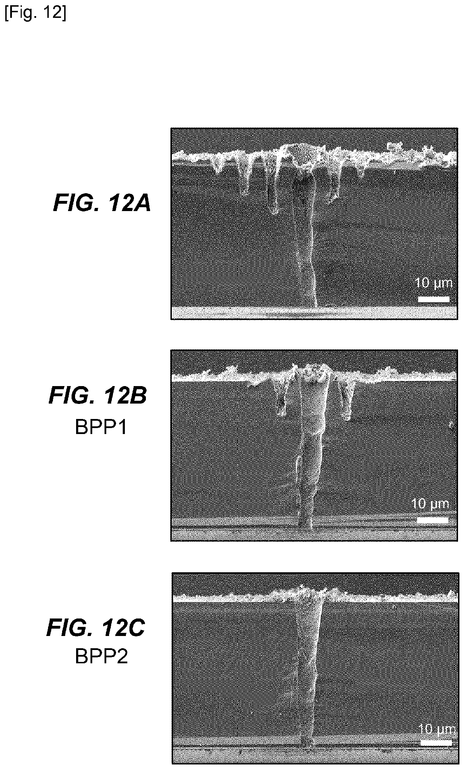

After the through holes were drilled by laser, the TSV samples were cut by use of a glazing knife, and the cross-sections were checked by SEM examination. FIG. 12 is SEM observation images of cross-sections obtained by TSV samples being cut, the TSV samples having been obtained by formation of through-holes in 50-$\mu$m thick Si substrates by laser beams having different profiles. By employment of the conventional Bessel beam, although almost taper-free TSVs were realized, the side-lobes up to the 3rd order generated undesirable damages around the TSVs. By use of the BPP1, side-lobe-induced damages were significantly reduced, but the damage caused by the 1st order side-lobe was still detected due to the relatively high SLR of 2.2%. In contrast, the BPP2 with the reduced SLR of about 0.6% and the side-lobe energy made lower than the damage occurring threshold completely enabled elimination of obvious damages.

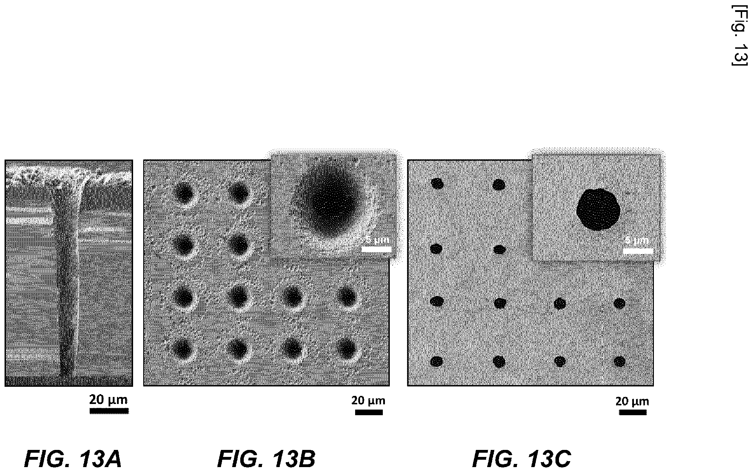

The inventors further tried to fabricate TSVs in 100-$\mu$m thick Si substrates with the above three types of fs laser beams, and it should be noted that formation of TSVs was only possible with the tailored Bessel beam of the BPP2 for the TSVs in the 100-$\mu$m thick Si substrates, differently from those in the 50-$\mu$m thick Si substrates. FIG. 13 is SEM observation images resulting from observation of a cross-section (FIG. 13A) and surfaces (the entrance side: FIG. 13B; and the exit side: FIG. 13C) of a sample having a TSV array with 50-$\mu$m intervals (array pitch) formed in a 100-$\mu$m thick Si substrate (referred to as "TSV sample"). The scale bars in the insets in FIG. 13B and FIG. 13C each have a length of 5 $\mu$m. The optimized pulse energy and number of shots for the process on the 100-$\mu$m thick Si substrate were 104 $\mu$J and 1200 shots. Differently from the 50-$\mu$m thickness, the other two types of fs laser did not succeed in forming through-holes in the 100-$\mu$m thick Si substrates, even if the incident pulse energy and the number of shots were increased. With the BPP2, the TSV array with 50-$\mu$m intervals was fabricated in the 100-$\mu$m thick Si substrate. As seen from the cross-section in FIG. 13A, no detectable side-lobe induced damages were observed, and this observation proved that the technique was valid for thick Si substrates having a thickness of, for example, 100 $\mu$m. In FIG. 13A, severe deposition of debris was observed, in particular, on the front surface (the upper side on the plane of paper) of the Si substrate. For removal of this debris, the TSV sample was bathed (without ultrasonic waves) in 47% HF, 70% $HNO_3$ and 100% $H_2O$ (at a volume ratio of 5:3:1) for ten minutes, and was thereafter washed by deionized pure water. Thereafter, both the front and rear surfaces of the TSV sample became clean, as illustrated in FIG. 13B and FIG. 13C.

3. Modifications

The present invention may be implemented through various embodiments modified from the above described embodiments. These various embodiments will be described as modifications.

3-1. First Modification: Annular Zone Phase Elements Other Than BPP

Effectiveness of the annular zone phase element has been described above mainly for binary phase plates (BPPs) as examples, but the annular zone phase element adoptable in the embodiments is not necessarily a BPP. For example, an annular zone phase element that imparts a binary or higher-arity phase distribution is also effective. Further, because of the characteristic that phases of integral multiples of $2\pi$ (one vibration or one wavelength) are indistinguishable from one another, for example, a stepwise difference in thickness and a phase distribution that imparts a phase difference of $2\pi$ or more may be treated in the same way as impartment of increase or decrease in the phase difference.

3-2. Second Modification: Orientation of Axicon

The protruding surface of the transmissive optical element 200, the protruding surface having a conical surface, has been described as being fixed at the exit side of the transmissive optical element 200, but depending on the properties of the annular zone phase element 100, the laser intensity, and the durability of the material of the axicon, the protruding surface of the axicon, the protruding surface having the conical surface, may be at the entrance side.

3-3. Third Modification: Close Contact and Integration

As to the above described embodiments, explanation has been made based on the example of use where the separately prepared transmissive optical element 200 and annular zone phase element 100 are arranged separately from each other, but the transmissive optical element 200 and the annular zone phase element 100 may be used by being made to closely contact each other with their functions being maintained. For example, if the annular zone phase element 100 and the transmissive optical element 200 are arranged from the laser light source 2 side as illustrated in FIG. 3, the annular zone phase element 100 is designed and manufactured by determination of its distance beforehand, but at the time of designing, the distance between the annular zone phase element 100 and the transmissive optical element 200 is set at an arbitrary arrangeable distance. Therefore, for example, close contact of the annular zone phase element 100, directly or via a certain light transmissive layer, with the transmissive optical element 200 is also one of embodiments of the present invention. In this case, increase in the quantity of transmitted light due to the reduction of the interface, and improvement of the practicability due to the reduction of alignment factors are able to be expected. Further, a configuration, in which the transmissive optical element 200 and the annular zone phase element 100 have been integrated into an integrated light transmissive member is also highly practical. Integration of the annular zone phase element 100 by a method, such as patterning of a certain light transmissive thin film on a planar portion of the transmissive optical element 200, or etching of the material itself of the transmissive optical element 200, is preferable in terms of practicability. For example, in a case where shape variation, such as the above described roundness, in the conical surface of the transmissive optical element 200 is unavoidable, if the annular zone phase element 100 having the individual shape error of the transmissive optical element 200 reflected therein has been integrated therewith, a user is able to obtain the beam shaping device 20 that easily achieves the expected performance just through a single optical member. Similarly, in addition to the transmissive optical element 200 and annular zone phase element 100, for example, the aperture 8 is also preferably integrated additionally therewith.

3-4. Fourth Modification: Cutting by subtractive Machining

In the above description related, in particular, to through holes, fabrication of isolated through holes or an array thereof has been explained. If a machining method according to this embodiment is used, for example, a Si wafer is able to be cut linearly continuously. The subtractive machining method of this embodiment enabling cutting at a thin line width is useful for, for example, an application where multiple valid chips are cut out from a wafer. Further, differently from dicing by use of a rotary thin film grindstone, the subtractive machining of this embodiment is useful in that cutting in shapes of not only straight lines, but also complicated curves and closed curves is possible.

Hereinbefore, the embodiments of the present invention have been described specifically. The above embodiments and configuration examples have been described for explanation of the present invention, and the scope of the invention of this patent application should be determined based on what are written in the claims.

Industrial Applicability

The present invention is usable in an arbitrary apparatus that uses laser having a central lobe extending in the optical axis direction, or an arbitrary apparatus that performs subtractive machining by use of such a laser beam.

Reference Signs List

| | |
|---|---|
| 10 | BEAM SHAPING DEVICE |
| 100 | ANNULAR ZONE PHASE ELEMENT |
| 102 | CENTRAL REGION |
| 104 | INTERMEDIATE REGION |
| 106 | PERIPHERAL REGION |
| 200 | TRANSMISSIVE OPTICAL ELEMENT |
| 2 | LIGHT SOURCE |
| 4 | OPTICAL PARAMETRIC AMPLIFIER |
| 6 | BEAM EXPANDER |
| 8 | APERTURE |
| 9 | ADDITIONAL OPTICAL SYSTEM |
| 92 | VARIABLE ND FILTER |
| 94 | SHUTTER |

| 96 | MIRROR |
| 1000 | SUBTRACTIVE MACHINING APPARATUS |
| 300 | POSITIONING DEVICE |
| 400 | OBSERVATION OPTICAL SYSTEM |
| 410 | FILTER |
| 420 | OBJECTIVE LENS |
| 430 | CAMERA |
| 500 | ASSISTING LIQUID VESSEL |
| A1 | TO A6 ANNULAR ZONE |
| W | WORKPIECE |
| SR | SECOND SURFACE |
| AL | ASSISTING LIQUID |

**Claims**

1.  A laser beam shaping device (10), comprising:

    an annular zone phase element (100) that imparts a phase distribution to laser light of a predetermined wavelength, the phase distribution increasing and decreasing axisymmetrically about a rotational axis according to distance from the rotational axis; and
    a transmissive optical element (200) that has a protruding surface on at least a part of a surface thereof and is made of a material having a higher refractive index than that of surroundings thereof at the predetermined wavelength, the protruding surface consisting of a shape of an approximately conical surface having a conical axis and a single base angle ($\beta$), **characterized**
    **in that** the annular zone phase element (100) has, in a region affected by the laser light of a predetermined wavelength,

       a central region (102) including the rotational axis and three (A1, A2, A3) annularly zoned regions,
       an intermediate region (104) surrounding the central region including an annularly zoned region (A4), and
       a peripheral region (106) surrounding the intermediate region and including two (A5, A6) annularly zoned regions,

    wherein the annular zone phase element (100) imparts to the laser light in the central region (102) and the peripheral region (106) a nonconstant phase that changes according to position for the phase distribution, and imparts to the laser light in the intermediate region (104) a constant phase that does not change according to position for the phase distribution, and wherein the phase distribution is such that portions of the laser light of the predetermined wavelength: are uniform in phase in each of the annularly zoned regions (A1-A6), and alternately change in phase over the annularly zoned regions (A1-A6), the portions respectively corresponding to the annularly zoned regions (A1-A6), the nonconstant phase distribution being caused by different thicknesses in the annularly zoned regions (A1-A6),
    **in that** the annular zone phase element (100) and the transmissive optical element (200) are arranged such that the laser light is propagated along the rotational axis and the conical axis and passes through the protruding surface,
    **in that** the laser beam shaping device (10) forms, from the laser light, a laser beam having a central lobe extending in a beam axis direction (z), and
    **in that** the annular zone phase element (100) exerts a function of focusing light that would otherwise be distributed to side-lobes surrounding the central lobe, onto the central lobe.

2.  The laser beam shaping device (10) according to claim 1, wherein the central region (102) consists of three annularly zoned regions (A1-A3), and the peripheral region (106) consists of two annularly zoned regions (A5-A6).

3.  The laser beam shaping device (10) according to claim 1 or 2, wherein
    the phase distribution alternately changes per annularly zoned region of the annularly zoned regions (A1-A6) such that adjacent ones of the annularly zoned regions (A1-A6) cause a phase difference of a half wavelength in the laser light of the predetermined wavelength.

4.  The laser beam shaping device (10) according to claim 1 or 2, wherein

a surface of the transmissive optical element (200) is a plane, the surface being opposite to the protruding surface, and

the arrangement of the annular zone phase element (100) and the transmissive optical element (200) are configured such that the laser light that has passed through the annular zone phase element (100) and has been produced with the phase distribution passes through the transmissive optical element (200) by entering from the plane and exiting from the protruding surface.

5. The laser beam shaping device (10) according to claim 4, wherein

the annular zone phase element (100) is a binary phase plate (BPP) of a light transmissive substance, the binary phase plate (BPP) having annularly zoned regions (A1-A6) divided by circles having their centers on the rotational axis, and

diameters of the circles dividing the annularly zoned regions (A1-A6) in the BPP are determined such that the laser light that has passed through the protruding surface of the transmissive optical element (200) forms a tailored Bessel beam that has reduced side-lobes and a central lobe extending in a beam axis direction (z) thereof.

6. The laser beam shaping device (10) according to claim 5, wherein

the protruding surface of the transmissive optical element (200) is shaped to have more roundness near the apex of the approximately conical surface, than a conical surface determined from the circumference of the approximately conical surface, and

the diameters ($r_1$-$r_5$) of the circles dividing the annularly zoned regions (A1-A6) in the BPP are determined by being adapted to the transmissive optical element (200) having the roundness reflected therein, such that the laser light that has passed through the protruding surface of the transmissive optical element (200) forms the tailored Bessel beam that has the reduced side-lobes and the central lobe extending in the beam axis direction (z).

7. The laser beam shaping device (10) according to claim 5, wherein a length of the central lobe along the beam axis direction (z) is shorter than a length of a central lobe of a beam for the laser light that passed through the transmissive optical element (200) with the annular zone phase element (100) removed.

8. A subtractive machining apparatus (1000) for use with a workpiece (W), comprising:

a light source (2, 4) for emitting a pulse of laser light of the predetermined wavelength;
the laser beam shaping device (10) according to any one of claim 3 to claim 5, on which the pulse of the laser light from the light source (2, 4) is incident; and
a positioning device (300) for performing positioning such that the central lobe formed by the laser beam shaping device (10) from the pulse of the laser light overlaps a part or all of a removal target path positioned inside the workpiece (W).

9. The subtractive machining apparatus (1000) according to claim 8, wherein

the laser beam shaping device (10) forms, from the laser light, a laser beam having a central lobe extending in a beam axis direction (z) thereof, and
the annular zone phase element (100) exerts a function of focusing light that would otherwise be distributed to side-lobes surrounding the central lobe, onto the central lobe.

10. The subtractive machining apparatus (1000) according to claim 8, wherein

the removal target path terminates at one of surfaces (SR) of the workpiece (W),
an assisting liquid (AL) having a function of assisting etching of the workpiece (W) when the assisting liquid (AL) receives light of the wavelength is in contact with the workpiece (W) at that surface (SR),
the positioning device performs the positioning such that the pulse passes inside the workpiece (W) and the central lobe reaches the assisting liquid (AL) at the surface (SR), and
the assisting liquid thereby receives the pulse and functions to assist the etching of the workpiece (W).

**Patentansprüche**

1.  Laserstrahlformungsvorrichtung (10), umfassend:

    ein Phasenelement mit ringförmigen Zonen (100), das Laserlicht einer vorbestimmten Wellenlänge eine Phasenverteilung verleiht, wobei die Phasenverteilung achsensymmetrisch um eine Rotationsachse entsprechend einem Abstand von der Rotationsachse zunimmt und abnimmt; und
    ein transmissives optisches Element (200), das auf mindestens einem Teil einer Oberfläche davon eine vorstehende Oberfläche aufweist und aus einem Material hergestellt ist, das einen höheren Brechungsindex als die Umgebung davon bei der vorbestimmten Wellenlänge aufweist, wobei die vorstehende Oberfläche aus einer Form einer annähernd konischen Oberfläche mit einer konischen Achse und einem einzigen Basiswinkel (β) besteht, **dadurch gekennzeichnet**
    **dass** das Phasenelement mit ringförmigen Zonen (100), in einem von dem Laserlicht einer vorbestimmten Wellenlänge beeinflussten Bereich, aufweist:

    einen zentralen Bereich (102), der die Rotationsachse und drei (A1, A2, A3) ringförmig zonierte Bereiche umfasst,
    einen Zwischenbereich (104), der den zentralen Bereich umgibt und einen ringförmig zonierten Bereich (A4) umfasst, und
    einen peripheren Bereich (106), der den Zwischenbereich umgibt und zwei (A5, A6) ringförmig zonierte Bereiche umfasst,

    wobei das Phasenelement mit ringförmigen Zonen (100) dem Laserlicht in dem zentralen Bereich (102) und dem peripheren Bereich (106) eine nicht konstante Phase verleiht, die sich entsprechend einer Position für die Phasenverteilung ändert, und dem Laserlicht in dem Zwischenbereich (104) eine konstante Phase verleiht, die sich entsprechend einer Position für die Phasenverteilung nicht ändert, und wobei die Phasenverteilung derart ist, dass Abschnitte des Laserlichts der vorbestimmten Wellenlänge: in jedem der ringförmig zonierten Bereiche (A1-A6) phasengleich sind, und abwechselnd ihre Phase über die ringförmig zonierten Bereiche (A1-A6) ändern, wobei die Abschnitte jeweils den ringförmig zonierten Bereichen (A1-A6) entsprechen, wobei die nicht konstante Phasenverteilung durch unterschiedliche Dicken in den ringförmig zonierten Bereichen (A1-A6) verursacht wird,
    **dass** das Phasenelement mit ringförmigen Zonen (100) und das transmissive optische Element (200) so angeordnet sind, dass sich das Laserlicht entlang der Rotationsachse und der konischen Achse ausbreitet und durch die vorstehende Oberfläche hindurchgeht,
    **dass** die Laserstrahlformungsvorrichtung (10) aus dem Laserlicht einen Laserstrahl mit einem zentralen Kegel bildet, der sich in einer Strahlachsenrichtung (z) erstreckt, und
    **dass** das Phasenelement mit ringförmigen Zonen (100) eine Funktion eines Fokussierens von Licht, das sonst auf den zentralen Kegel umgebende Seitenkegel verteilt würde, auf den zentralen Kegel ausübt.

2.  Laserstrahlformungsvorrichtung (10) nach Anspruch 1, wobei der zentrale Bereich (102) aus drei ringförmig zonierten Bereichen (A1-A3) besteht und der periphere Bereich (106) aus zwei ringförmig zonierten Bereichen (A5-A6) besteht.

3.  Laserstrahlformungsvorrichtung (10) nach Anspruch 1 oder 2, wobei
    die Phasenverteilung sich abwechselnd pro ringförmig zoniertem Bereich der ringförmig zonierten Bereiche (A1-A6) so ändert, dass benachbarte der ringförmig zonierten Bereiche (A1-A6) eine Phasendifferenz von einer halben Wellenlänge in dem Laserlicht der vorbestimmten Wellenlänge verursachen.

4.  Laserstrahlformungsvorrichtung (10) nach Anspruch 1 oder 2, wobei

    eine Oberfläche des transmissiven optischen Elements (200) eine Ebene ist, wobei die Oberfläche der vorstehenden Oberfläche gegenüberliegt, und
    die Anordnung des Phasenelements mit ringförmigen Zonen (100) und des transmissiven optischen Elements (200) so ausgestaltet ist, dass das Laserlicht, das durch das Phasenelement mit ringförmigen Zonen (100) hindurchgegangen ist und mit der Phasenverteilung erzeugt wurde, durch das transmissive optische Element (200) durch Eintreten aus der Ebene und Austreten aus der vorstehenden Oberfläche hindurchgeht.

5.  Laserstrahlformungsvorrichtung (10) nach Anspruch 4, wobei

    das Phasenelement mit ringförmigen Zonen (100) eine Binärphasenplatte (BPP) aus einer lichtdurchlässigen Substanz ist, wobei die Binärphasenplatte (BPP) ringförmig zonierte Bereiche (A1-A6) aufweist, die durch Kreise geteilt sind, deren Mittelpunkte auf der Rotationsachse liegen, und

Durchmesser der Kreise, die die ringförmig zonierten Bereiche (A1-A6) in der BPP unterteilen, so bestimmt werden, dass das Laserlicht, das durch die vorstehende Oberfläche des transmissiven optischen Elements (200) hindurchgegangen ist, einen maßgenauen Bessel-Strahl bildet, der reduzierte Seitenkegel und einen zentralen Kegel aufweist, der sich in einer Strahlachsenrichtung (z) davon erstreckt.

**6.** Laserstrahlformungsvorrichtung (10) nach Anspruch 5, wobei

die vorstehende Oberfläche des transmissiven optischen Elements (200) so geformt ist, dass sie in der Nähe des Scheitelpunkts der annähernd konischen Oberfläche eine größere Rundheit aufweist als eine konische Oberfläche, die aus dem Umfang der annähernd konischen Oberfläche bestimmt wird, und

die Durchmesser ($r_1$-$r_5$) der Kreise, die die ringförmig zonierten Bereiche (A1-A6) in der BPP unterteilen, durch Anpassen an das transmissive optische Element (200) mit der darin reflektierten Rundheit bestimmt werden, so dass das Laserlicht, das durch die vorstehende Oberfläche des transmissiven optischen Elements (200) hindurchgegangen ist, den maßgenauen Bessel-Strahl bildet, der die reduzierten Seitenkegel und den zentralen Kegel aufweist, der sich in der Strahlachsenrichtung (z) erstreckt.

**7.** Laserstrahlformungsvorrichtung (10) nach Anspruch 5, wobei eine Länge des zentralen Kegels entlang der Strahlachsenrichtung (z) kürzer ist als eine Länge eines zentralen Kegels eines Strahls für das Laserlicht, der durch das transmissive optische Element (200) bei entferntem Phasenelement mit ringförmigen Zonen (100) hindurchgegangen ist.

**8.** Subtraktives Bearbeitungsgerät (1000) zur Verwendung mit einem Werkstück (W), umfassend:

eine Lichtquelle (2, 4) zum Emittieren eines Laserlichtpulses der vorbestimmten Wellenlänge;
die Laserstrahlformungsvorrichtung (10) nach einem der Ansprüche 3 bis 5, auf die der Laserlichtpuls von der Lichtquelle (2, 4) auftrifft; und
eine Positionierungsvorrichtung (300) zum Durchführen einer Positionierung, so dass der zentrale Kegel, der durch die Laserstrahlformungsvorrichtung (10) aus dem Laserlichtpuls gebildet wird, einen Teil eines oder einen gesamten Abtragungszielpfad überlappt, der innerhalb des Werkstücks (W) positioniert ist.

**9.** Subtraktives Bearbeitungsgerät (1000) nach Anspruch 8, wobei

die Laserstrahlformungsvorrichtung (10) aus dem Laserlicht einen Laserstrahl mit einem zentralen Kegel bildet, der sich in einer Strahlachsenrichtung (z) davon erstreckt, und
das Phasenelement mit ringförmigen Zonen (100) eine Funktion eines Fokussierens von Licht, das sonst auf den zentralen Kegel umgebende Seitenkegel verteilt würde, auf den zentralen Kegel ausübt.

**10.** Subtraktives Bearbeitungsgerät (1000) nach Anspruch 8, wobei

der Abtragungszielpfad an einer der Oberflächen (SR) des Werkstücks (W) endet,
eine Hilfsflüssigkeit (AL), die eine Funktion eines Unterstützens eines Ätzens des Werkstücks (W) aufweist, wenn die Hilfsflüssigkeit (AL) Licht der Wellenlänge empfängt, in Kontakt mit dem Werkstück (W) an dieser Oberfläche (SR) ist,
die Positioniervorrichtung das Positionieren so durchführt, dass der Puls das Innere des Werkstücks (W) passiert und der zentrale Kegel die Hilfsflüssigkeit (AL) an der Oberfläche (SR) erreicht, und
die Hilfsflüssigkeit dadurch den Puls empfängt und eine Funktion eines Unterstützens des Ätzens des Werkstücks (W) aufweist.

**Revendications**

**1.** Dispositif de formation de faisceau laser (10), comprenant :

un élément de phase comprenant des zones annulaires (100) qui confère une distribution de phase à une lumière laser d'une longueur d'onde prédéterminée, la distribution de phase augmentant et diminuant de manière axisymétrique autour d'un axe de rotation en fonction d'une distance par rapport à l'axe de rotation ; et

un élément optique transmissif (200) ayant une surface en saillie sur au moins une partie d'une surface de celui-ci et étant fait d'un matériau ayant un indice de réfraction supérieur à celui de son environnement à la longueur d'onde prédéterminée, la surface en saillie étant constituée d'une forme de surface approximativement conique ayant un axe conique et un seul angle de base (β), **caractérisé en ce que** l'élément de phase comprenant des zones annulaires (100) a, dans une région influencée par la lumière laser d'une longueur d'onde prédéterminée :

une zone centrale (102) comprenant l'axe de rotation et trois (A1, A2, A3) zones annulaires, une zone intermédiaire (104) entourant la zone centrale et comprenant une zone zonée annulaire (A4), et une zone périphérique (106) entourant la zone intermédiaire et comprenant deux zones (A5, A6) zonées de manière annulaire,

dans lequel l'élément de phase à zones annulaires (100) confère à la lumière laser dans la région centrale (102) et à la région périphérique (106) une phase non constante qui varie en fonction d'une position pour la distribution de phase, et confère à la lumière laser dans la région intermédiaire (104) une phase constante qui ne varie pas en fonction d'une position pour la distribution de phase, et dans lequel la distribution de phase est telle que des parties de la lumière laser de la longueur d'onde prédéterminée :
sont en phase dans chacune des régions zonées annulairement (A1-A6), et changent alternativement de phase sur les régions zonées annulairement (A1-A6), les sections correspondant respectivement aux régions zonées annulairement (A1-A6), la distribution de phase non constante étant provoquée par des épaisseurs différentes dans les régions zonées annulairement (A1-A6) ,
**en ce que** l'élément de phase à zones annulaires (100) et l'élément optique transmissif (200) sont disposés de telle sorte que la lumière laser se propage le long de l'axe de rotation et de l'axe conique et passe à travers la surface en saillie,
**en ce que** le dispositif de formation de faisceau laser (10) forme à partir de la lumière laser un faisceau laser avec un cône central qui s'étend dans une direction d'axe de faisceau (z), et
**en ce que** l'élément de phase à zones annulaires (100) exerce une fonction de focalisation de la lumière sur le cône central de la lumière qui serait autrement répartie sur des cônes latéraux entourant le cône central.

2. Dispositif de formation de faisceau laser (10) selon la revendication 1, dans lequel la région centrale (102) est constituée de trois régions zonées de manière annulaire (A1-A3) et la région périphérique (106) se compose de deux régions zonées annulairement (A5-A6).

3. Dispositif de formation de faisceau laser (10) selon la revendication 1 ou 2, dans lequel
la distribution de phase change alternativement par région zonée annulairement des régions zonées annulairement (A1-A6) de sorte que des régions adjacentes des régions zonées annulairement (A1-A6) provoquent une différence de phase d'une demi-longueur d'onde dans la lumière laser de la longueur d'onde prédéterminée.

4. Dispositif de formation de faisceau laser (10) selon la revendication 1 ou 2, dans lequel

une surface de l'élément optique transmissif (200) est un plan, la surface étant opposée à la surface en saillie, et l'agencement de l'élément de phase à zones annulaires (100) et de l'élément optique transmissif (200) est tel que la lumière laser qui a traversé l'élément de phase à zones annulaires (100) et qui a été générée avec la distribution de phase traverse l'élément optique transmissif (200) en entrant du plan et en sortant de la surface en saillie.

5. Dispositif de formation de faisceau laser (10) selon la revendication 4, dans lequel

l'élément de phase à zones annulaires (100) est une plaque de phase binaire (BPP) constituée d'une substance transmettant la lumière, la plaque de phase binaire (BPP) présentant des régions zonées annulairement (A1-A6) qui sont divisées par des cercles dont les centres se trouvent sur l'axe de rotation, et des diamètres des cercles qui divisent les régions zonées annulairement (A1-A6) dans le BPP sont déterminés de telle sorte que la lumière laser qui a traversé la surface en saillie de l'élément optique transmissif (200) forme un faisceau de Bessel de dimensions précises ayant des cônes latéraux réduits et un cône central s'étendant dans une direction d'axe de faisceau (z) de celui-ci.

6. Dispositif de formation de faisceau laser (10) selon la revendication 5, dans lequel

la surface en saillie de l'élément optique transmissif (200) est formée de manière à avoir une rotondité plus grande au voisinage du sommet de la surface approximativement conique qu'une surface conique déterminée à partir de la circonférence de la surface approximativement conique, et

les diamètres ($r_1$-$r_5$) des cercles divisant les régions zonées annulairement (A1-A6) dans le BPP sont déterminés en s'adaptant à l'élément optique transmissif (200) avec la rotondité réfléchie dans celui-ci, de sorte que la lumière laser qui a traversé la surface en saillie de l'élément optique transmissif (200) forme le faisceau de Bessel aux dimensions exactes comprenant les cônes latéraux réduits et le cône central qui s'étend dans la direction de l'axe du faisceau (z).

**7.** Dispositif de formation de faisceau laser (10) selon la revendication 5, dans lequel une longueur du cône central le long de la direction de l'axe du faisceau (z) est plus courte qu'une longueur d'un cône central d'un faisceau pour la lumière laser qui a traversé l'élément optique transmissif (200) avec l'élément de phase à zones annulaires (100) retiré.

**8.** Appareil d'usinage soustractif (1000) destiné à être utilisé avec une pièce à usiner (W), comprenant :

une source de lumière (2, 4) pour émettre une impulsion de lumière laser de la longueur d'onde prédéterminée ;
le dispositif de formation de faisceau laser (10) selon l'une quelconque des revendications 3 à 5, sur lequel l'impulsion de lumière laser provenant de la source de lumière (2, 4) est incidente ; et
un dispositif de positionnement (300) pour effectuer un positionnement de sorte que le cône central formé par le dispositif de formation de faisceau laser (10) à partir de l'impulsion de lumière laser chevauche une partie ou la totalité d'un trajet cible d'enlèvement positionné à l'intérieur de la pièce à usiner (W).

**9.** Appareil d'usinage soustractif (1000) selon la revendication 8, dans lequel

le dispositif de formation de faisceau laser (10) forme à partir de la lumière laser un faisceau laser ayant un cône central qui s'étend dans une direction d'axe de faisceau (z) de celui-ci, et
l'élément de phase à zones annulaires (100) exerce une fonction de focalisation de la lumière sur le cône central de la lumière qui serait autrement répartie sur des cônes latéraux entourant le cône central.

**10.** Appareil d'usinage soustractif (1000) selon la revendication 8, dans lequel

le trajet cible d'enlèvement se termine à l'une des surfaces (SR) de la pièce à usiner (W),
un liquide auxiliaire (AL) ayant une fonction d'aide à la gravure de la pièce à usiner (W) lorsque le liquide auxiliaire (AL) reçoit de la lumière de la longueur d'onde est en contact avec la pièce à usiner (W) au niveau de ladite surface (SR),
le dispositif de positionnement effectue le positionnement de telle sorte que l'impulsion passe à l'intérieur de la pièce à usiner (W) et que le cône central atteigne le liquide auxiliaire (AL) à la surface (SR), et
le liquide auxiliaire reçoit ainsi l'impulsion et a une fonction d'aide à la gravure de la pièce à usiner (W).

[Fig. 1]

*z-axis, or x, y =(0, 0)*

PK

BB

z=L

z

x → y

z=0

200

B

**FIG. 1A**

*Intensity*

*x, y*

**FIG. 1B**

[Fig. 2]

FRONT

10 μm

*FIG. 2A*

BACK

10 μm

*FIG. 2B*

[Fig. 3]

*FIG. 3*

[Fig. 4]

FIG. 4A

FIG. 4B

FIG. 4C

FIG.4D

[Fig. 5]

## FIG. 5A

## FIG. 5B

[Fig. 6]

**FIG. 6**

[Fig. 7]

FIG. 7

[Fig. 8]

FIG. 8A

FIG. 8B

FIG. 8C

FIG. 8D

FIG. 8E

FIG. 8F

[Fig. 9]

FIG. 9A

FIG. 9B
BPP1

FIG. 9C
BPP2

[Fig. 10]

[Fig. 11]

FIG. 11

[Fig. 12]

**FIG. 12A**

**FIG. 12B**
BPP1

**FIG. 12C**
BPP2

[Fig. 13]

FIG. 13A   FIG. 13B   FIG. 13C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015226922 A
- JP 2011170052 A
- JP H06082720 A
- JP 3553986 B
- CN 101930090 A
- US 2014003456 A1

**Non-patent literature cited in the description**

- **M. K. BHUYAN**. High aspect ratio nanochannel machining using single shot femtosecond Bessel beams. *Appl. Phys. Lett.*, 2010, vol. 97, 081102
- **J. JIA**. Superresolution laser beam shaping. *Appl Opt*, 2004, vol. 43, 2112-2117
- **X. WANG**. Resolution improvement of femtosecond laser induced two-photon polymerization based on phase filtering. *Opt. Eng.*, 2011, vol. 50 (5), 054302